# EUROPEAN PATENT SPECIFICATION

(11) **EP 3 904 079 B1**
(45) Date of publication and mention of the grant of the patent: **29.10.2025**
(21) Application number: 19902003.3
(22) Date of filing: 25.12.2019
(51) Int. Cl.: B32B 27/00, B32B 27/34, C08F 283/04, C08F 2/44, B32B 7/06, B32B 7/12, B32B 25/08, B32B 27/10, B32B 27/22, B32B 27/28, B32B 27/18, B32B 27/30, B32B 27/32, B32B 27/36, B32B 27/40, C09D 151/08, B32B 27/08

(54) **GAS BARRIER LAMINATE**
GASBARRIERELAMINAT
STRATIFIÉ DOTÉ DE PROPRIÉTÉS BARRIÈRE AU GAZ

(30) Priority: 27.12.2018 JP 2018244711
(43) Date of publication of application: 03.11.2021
(73) Proprietor: LINTEC CORPORATION, Itabashi-ku Tokyo 173-0001 (JP)
(72) Inventor: KINOSHITA, Hiroki, Tokyo 173-0001 (JP); NAGANAWA, Satoshi, Tokyo 173-0001 (JP)
(74) Representative: Gille Hrabal Partnerschaftsgesellschaft mbB Patentanwälte
(86) International application number: PCT/JP2019/050922
(87) International publication number: WO 2020/138206

(56) References cited:
- WO-A1-2013/065812
- WO-A1-2017/090592
- WO-A1-2018/016346
- WO-A1-2018/180962
- JP-A- 2004 299 230
- JP-A- 2014 166 722
- JP-A- 2018 027 660
- US-A1- 2005 112 378
- DATABASE WPI Week 201578, Derwent World Patents Index; AN 2015-68960Q, XP002807265
- DATABASE WPI Week 201719, Derwent World Patents Index; AN 2017-14800E, XP002807266

## Description

### [Technical Field]

The present invention relates to a gas barrier laminate that can be preferably used as a member for an electronic device such as a liquid crystal display or an electroluminescent (EL) display.

### [Background Art]

For displays, such as liquid crystal displays or electroluminescent (EL) displays, in order to make them thinner, lighter, and more flexible, there have been discussions about using a transparent plastic film instead of a glass plate.

However, in general, a plastic film is more permeable to water vapor, oxygen, or the like than a glass plate, and when a transparent plastic film is used as a substrate for a display, the water vapor, oxygen, or the like that has passed through the substrate can act on the elements or other objects inside the display device, leading to deteriorated performance and shortened life of the device.

In order to solve this problem, it has been proposed to use a film having a property of suppressing the permeation of the water vapor or oxygen as the substrate for a display. Hereinafter, a property of suppressing the permeation of the water vapor, oxygen, or the like is referred to as a "gas barrier property", a film having a gas barrier property is referred to as a "gas barrier film", and a laminate having a gas barrier property is referred to as a "gas barrier laminate".

In recent years, higher performance displays are in demand. Consequently, being used as members for electronic devices or the like, gas barrier films that excel in various properties have also become in demand; these various properties include not only excellent gas barrier properties, but also excellent heat resistance, solvent resistance, and interlayer adhesion, as well as low birefringence and excellent optical isotropy.

For example, Patent Document 1 proposes a gas barrier film having a gas barrier layer provided on one side of a cured resin layer, the cured resin layer being formed of a cured product of a curable resin composition containing a thermoplastic resin having a glass transition temperature of 140°C or higher and a curable monomer.

Patent Document 2 discloses a gas barrier film obtained by laminating, on at least one face of a substrate, an organic layer, an organic layer, an organic layer, and an inorganic layer in this order, and in which the glass transition temperature T1 of the organic layer, the glass transition temperature T2 of the organic layer 2, and the glass transition temperature T3 of the organic layer 3 satisfy predetermined conditions.

Patent Document 3 discloses a gas barrier film including a substrate, a gas barrier layer provided on one side of the substrate having one or more sets of inorganic layers and organic layers, and a release resin layer provided between the substrate and the gas barrier layer to adhere to the organic layers and to peel off from the substrate.

Patent Document 4 discloses a gas barrier film alternately comprising at least one inorganic layer and at least one organic layer on a resin base material having a glass transition temperature of 250° C. or higher.

### [Citation List]

### [Patent Literature]

Patent Document 1: WO 2013/065812
Patent Document 2: JP 2015 196315 A
Patent Document 3: JP 2017 043060 A
Patent Document 4: US 2005/112378 A1

### [Summary of Invention]

### [Technical Problem]

However, there is still room for improvement for gas barrier laminates. In order to achieve even thinner and lighter electronic devices while maintaining a high optical isotropy, or in order to possess flexibility and bending resistance to accommodate a wider variety of electronic devices, gas barrier laminates that enable thickness reduction and further improvement of gas barrier properties are sought after.

In light of the problems described above, an object of the present invention is to provide a gas barrier laminate that has excellent optical isotropy, enables thickness reduction, has an excellent gas barrier property, and is suitable to be used as a member for an electronic device.

### [Solution to Problem]

As a result of diligent research to solve the above problem, the present inventors discovered that a solution is a gas barrier laminate including, a process film, a base layer, and a gas barrier layer, in this order, the base layer being a layer formed of a cured product of a curable resin composition containing a polymer component (A) and a curable monomer (B), and the polymer component (A) having a specific glass transition temperature. The present invention was thus completed.

That is, the present invention provides the following [1] to [8].
[1] A gas barrier laminate comprising a process film, a base layer, and a gas barrier layer, in this order,
   the base layer being a layer formed of a cured product of a curable resin composition containing a polymer component (A) and a curable monomer (B), and
   the polymer component (A) having a glass transition temperature of 250°C or higher,
   wherein the polymer component (A) comprises a polyimide resin and the curable monomer (B) comprises a monofunctional (meth)acrylic acid derivative or a polyfunctional (meth)acrylic acid derivative, and
   wherein the glass transition temperature of the polymer component is the temperature at the maximum of tanδ obtained by viscoelasticity measurement under a tensile mode with a frequency of 11 Hz, a heating rate of 3°C/minute, and a range of from 0 to 250°C. [2] The gas barrier laminate according to [1], wherein the polymer component (A) has a weight average molecular weight of 100000 or greater, and
   the weight average molecular weight is measured by gel permeation chromatography and calibrated with polystyrene. [3] The gas barrier laminate according to [1] or [2], wherein the polyimide resin is soluble in methyl ethyl ketone.
[4] The gas barrier laminate according to [3], wherein the polyimide resin includes a fluoro group in the molecule.
[5] The gas barrier laminate according to any one of [1] to [4], wherein the base layer has a thickness from 0.1 to 10 µm.
[6] The gas barrier laminate according to any one of [1] to [5], wherein the gas barrier layer is a coating film.
[7] The gas barrier laminate according to any one of [1] to [6], wherein the base layer has an elongation at break of 2.5% or greater, and
   the elongation at break is measured by the following procedure:
   the base layer is cut into a test piece of 15 mm × 150 mm, the test piece is placed on a tensile tester with a distance between chucks set at 100 mm, and then, a tensile test is performed by the tensile tester at a rate of 200 mm/min to measure the elongation at break.
[8] The gas barrier laminate according to any one of [1] to [7],
   wherein the base layer has a tensile elastic modulus at 130°C of 1 × 10³ MPa or greater, and
   the tensile elastic modulus is measured in accordance with JIS K 7127:1999 by the following procedure:
      the base layer is cut into a test piece of 15 mm × 150 mm, the test piece is placed in a tensile tester with a constant-temperature bath, the distance between chucks is set to 100 mm, the test piece is heated for 3 minutes at 130°C, a tensile test is performed at a rate of 200 mm/min, and the maximum slope of the tensile stress with respect to the tensile displacement is defined as the tensile elastic modulus.

### [Advantageous Effects of Invention]

The present invention provides a gas barrier laminate that has excellent optical isotropy, enables thickness reduction, and has an excellent gas barrier property.

### [Brief Description of Drawings]

Fig. 1 is a schematic cross-sectional view illustrating an example of a configuration of a gas barrier laminate according to an embodiment of the present invention.
Fig. 2 is a process chart illustrating an example of a method for manufacturing the gas barrier laminate.

### [Description of Embodiments]

In the present specification, the preferred provisions can be selected as desired, and combinations of the preferred provisions are more preferable.

In the present specification, the description "from XX to YY" means "not less than XX and not more than YY".

In the present specification, the lower and upper limits of a preferable numerical range (for example, a range of content) described in series can each be independently combined. For example, from the description "preferably from 10 to 90, more preferably from 30 to 60", the "preferred lower limit (10)" and the "preferred upper limit (60)" may be combined as "from 10 to 60".

In the present specification, for example, "(meth)acrylic acid" refers to both "acrylic acid" and "methacrylic acid", and the same is true of other similar terms.

A gas barrier laminate according to an embodiment of the present invention will be described below.

### (1. Gas barrier laminate)

A gas barrier laminate according to an embodiment of the present invention includes a process film, a base layer, and a gas barrier layer, in this order. Furthermore, the base layer is a layer formed of a cured product of a curable resin composition containing a polymer component (A) and a curable monomer (B), the polymer component (A) having a glass transition temperature (Tg) of 250°C or higher.

### (1-1. Base layer)

The base layer of the gas barrier laminate according to an embodiment of the present invention is formed of a cured product of a curable resin composition containing a polymer component (A) having a Tg of 250°C or higher and a curable monomer (B). The base layer may be a single layer, or may include a plurality of laminated layers.

### (Polymer component (A))

The Tg of the polymer component (A) is 250°C or higher, preferably 290°C or higher, and more preferably 320°C or higher. By using the polymer component (A) having a Tg of 250°C or higher, a gas barrier laminate having excellent heat resistance can be obtained. When the Tg of the polymer component (A) is lower than 250°C, sufficient heat resistance cannot be imparted to the base layer. For example, when the gas barrier layer is formed of a coating film, heating during application of the coating film may cause the base layer to, for example, deform. As a result, sufficient gas barrier property may not be able to be imparted to the gas barrier layer. Note that a coating film is a film obtained by coating a substrate or a target object with a coating material and performing a treatment such as curing by drying or heating as needed. When the gas barrier layer is a coating film, the coating film is a film obtained by coating the base layer with a coating material containing a component which forms the gas barrier layer, as described below, and performing, for example, curing by drying or heating. Furthermore, when the base layer is a coating film, the coating film is a film obtained by coating an object to be coated, such as the process film, with the curable resin composition and performing a curing treatment by either drying and heating or irradiation with an active energy ray, or both.

Here, "Tg" refers to the temperature at the maximum of tanδ (loss modulus/storage modulus) obtained by viscoelasticity measurement (measured under a tensile mode with a frequency of 11 Hz, a heating rate of 3°C/minute, and a range of from 0 to 250°C).

The weight average molecular weight (Mw) of the polymer component (A) is typically in the range from 100000 to 3000000, preferably from 200000 to 2000000, and more preferably from 500000 to 1000000. Furthermore, the molecular weight distribution (Mw/Mn) is preferably in the range from 1.0 to 5.0, more preferably from 2.0 to 4.5. The weight average molecular weight (Mw) and molecular weight distribution (Mw/Mn) are measured by gel permeation chromatography (GPC) and calibrated with polystyrene. When the polymer component has the Mw of 100000 or greater it facilitates an increase in elongation at break of the base layer.

The polymer component (A) is preferably a thermoplastic resin, more preferably an amorphous thermoplastic resin. Using an amorphous thermoplastic resin makes it easier to obtain a base layer having excellent optical isotropy, and furthermore, a gas barrier laminate having excellent transparency. In addition, an amorphous thermoplastic resin is generally easily soluble in an organic solvent, and therefore, as described below, the base layer can be formed efficiently using a solution casting method.

Here, "amorphous thermoplastic resin" refers to a thermoplastic resin of which a melting point is not observed in differential scanning calorimetry.

The polymer component (A) is preferably soluble in a general-purpose organic solvent having a low boiling point such as benzene or methyl ethyl ketone (MEK). When the polymer component (A) is soluble in a general-purpose organic solvent, the base layer can be easily formed by coating.

The polymer component (A) is particularly preferably an amorphous thermoplastic resin having a Tg of 250°C or higher and solubility in a general-purpose organic solvent with a low boiling point such as benzene and methyl ethyl ketone.

Furthermore, from the perspective of heat resistance, the polymer component (A) is preferably a thermoplastic resin having a ring structure such as an aromatic ring structure or an alicyclic structure, more preferably a thermoplastic resin having an aromatic ring structure.

The polymer component (A) comprises a polyimide resin; it has a Tg of 250°C or higher. In general, these resins have a high Tg and excellent heat resistance; furthermore, since these resins are amorphous thermoplastic resins, it is possible to form a coating film by a solution casting method. A polyimide resin has high Tg and excellent heat resistance. It is easy to obtain a polyimide resin that exhibits good heat resistance and that is soluble in a general-purpose organic solvent.

The polyimide resin is not limited as long as the effect of the present invention is not impaired; examples of the polyimide resin that can be used include an aromatic polyimide resin, an aromatic (carboxylic acid component)-cyclic aliphatic (diamine component) polyimide resin, a cycloaliphatic (carboxylic acid component)-aromatic (diamine component) polyimide resin, a cycloaliphatic polyimide resin, and a fluorinated aromatic polyimide resin. In particular, a polyimide resin having a fluoro group in the molecule is preferable.

Specifically, the polyimide resin is preferably produced by preparing a polyamic acid by the polymerization of an aromatic diamine compound and a tetracarboxylic dianhydride and then subjecting the resulting polyamic acid to a chemical imidization reaction.

Any aromatic diamine compound can be used as long as it is one that, via the reaction with the tetracarboxylic dianhydride used together, gives a polyimide that is soluble in a common solvent (for example, N,N-dimethylacetamide (DMAC)) and has a predetermined transparency. Specific examples include m-phenylenediamine, p-phenylenediamine, 3,4'-diaminodiphenyl ether, 4,4'-diaminodiphenyl ether, 3,3'-diaminodiphenyl sulfide, 3,4'-diaminodiphenyl sulfide, 4,4'-diaminodiphenyl sulfide, 3,3'-diaminodiphenyl sulfone, 3,4'-diaminodiphenyl sulfone, 4,4'-diaminodiphenyl sulfone, 3,3'-diaminobenzophenone, 3,3'-diaminodiphenylmethane, 3,4'-diaminodiphenylmethane, 4,4'-diaminodiphenylmethane, 2,2-bis(4-aminophenyl)propane, 2,2-bis(3-aminophenyl)propane, 2-(3-aminophenyl)-2-(4-aminophenyl)propane, 2,2-bis(4-aminophenyl)-1,1,1,3,3,3-hexafluoropropane, 2,2-bis(3-aminophenyl)-1,1,1,3,3,3-hexafluoropropane, 2-(3-aminophenyl)-2-(4-aminophenyl)-1,1, 1,3,3,3-hexafluoropropane, 1,3-bis(3-aminophenoxy)benzene, 1,3-bis(4-aminophenoxy)benzene, 1,4-bis(3-aminophenoxy)benzene, 1,4-bis(4-aminophenoxy)benzene, 4,4'-bis(4-aminophenoxy)biphenyl, 3,3'-bis(4-aminophenoxy)biphenyl, 3,4'-bis(3-aminophenoxy)biphenyl, bis[4-(4-aminophenoxy)phenyl]sulfide, bis[3-(4-aminophenoxy)phenyl]sulfide, bis[4-(3-aminophenoxy)phenyl]sulfide, bis[3-(4-aminophenoxy)phenyl]sulfide, bis[3-(3-aminophenoxy)phenyl]sulfide, bis[3-(4-aminophenoxy)phenyl]sulfone, bis[4-(4-aminophenyl)]sulfone, bis[3-(3-aminophenoxy)phenyl]sulfone, bis[4-(3-aminophenyl)]sulfone, bis[4-(3-aminophenoxy)phenyl]ether, bis[4-(4-aminophenoxy)phenyl]ether, bis[3-(3-aminophenoxy)phenyl]ether, bis[4-(3-aminophenoxy)phenyl]methane, bis[4-(4-aminophenoxy)phenyl]methane, bis[3-(3-aminophenoxy)phenyl]methane, bis[3-(4-aminophenoxy)phenyl]methane, 2,2-bis[4-(3-aminophenoxy)phenyl]propane, 2,2-bis[4-(4-aminophenoxy)phenyl]propane, 2,2-bis[3-(3-aminophenoxy)phenyl]propane, 2,2-bis[4-(3-aminophenoxy)phenyl]-1,1,1,3,3,3-hexafluoropropane, 2,2-bis[4-(4-aminophenoxy)phenyl]-1,1,1,3,3,3-hexafluoropropane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 1,3-bis[4-(4-amino-6-trifluoromethylphenoxy)-α,α-dimethylbenzyl]benzene, 1,3-bis[4-(4-amino-6-fluoromethylphenoxy)-α,α-dimethylbenzyl]benzene, 2,2'-dimethyl-4,4'-diaminobiphenyl, 3,3'-dimethyl-4,4'-diaminobiphenyl, 3,3'-bis(trifluoromethyl)-4,4'-diaminobiphenyl, and 2,2'-bis(trifluoromethyl)-4,4'-diaminobiphenyl.

These aromatic diamine compounds may be used alone or in a combination of two or more. Furthermore, from the perspective of transparency and heat resistance, preferable aromatic diamine compounds are the ones having a fluoro group, such as 2,2-bis(4-aminophenyl)-1,1,1,3,3,3-hexafluoropropane, 2,2-bis(3-aminophenyl)-1,1,1,3,3,3-hexafluoropropane, 2-(3-aminophenyl)-2-(4-aminophenyl)-1,1,1,3,3,3-hexafluoropropane, 2,2-bis[4-(3-aminophenoxy)phenyl]-1,1,1,3,3,3-hexafluoropropane, 2,2-bis[4-(4-aminophenoxy)phenyl]-1,1,1,3,3,3-hexafluoropropane, 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 1,3-bis[4-(4-amino-6-trifluoromethylphenoxy)-α,α-dimethylbenzyl]benzene, 3,3'-bis(trifluoromethyl)-4,4'-diaminobiphenyl, and 2,2'-bis(trifluoromethyl)-4,4'-diaminobiphenyl. At least one aromatic diamine compound to be used is preferably one having a fluoro group, and is particularly preferably 2,2'-bis(trifluoromethyl)-4,4'-diaminobiphenyl. The use of an aromatic diamine compound having a fluoro group facilitates the formation of polyimide having transparency, heat resistance, and solubility in a solvent.

Similar to the description of aromatic diamine compound above, any tetracarboxylic dianhydride can be used as long as it is one that gives a polyimide that is soluble in a common solvent (for example, N,N-dimethylacetamide (DMAC)) and has a predetermined transparency. Specific examples of the tetracarboxylic dianhydride include 4,4'-(1,1,1,3,3,3-hexafluoropropane-2,2-diyl)diphthalic acid dianhydride, pyromellitic dianhydride, 3,3',4,4'-benzophenone tetracarboxylic dianhydride, 1,4-hydroquinone dibenzoate-3,3',4,4'-tetracarboxylic dianhydride, 3,3',4,4'-biphenyltetracarboxylic dianhydride, and 3,3',4,4'-diphenylether tetracarboxylic dianhydride. These tetracarboxylic dianhydrides may be used alone or in a combination of two or more. Furthermore, from the perspective of transparency, heat resistance, and solubility in a solvent, it is preferable to use a tetracarboxylic dianhydride having at least one type of fluoro group, such as 4,4'-(1,1,1,3,3,3-hexafluoropropane-2,2-diyl)diphthalic acid dianhydride.

The polymerization for preparing polyamic acid can be performed by reacting the aromatic diamine compound and tetracarboxylic dianhydride under their dissolution in a solvent in which the resulting polyamic acid is soluble. Examples of the solvent that can be used as the solvent used in the polymerization for preparing polyamic acid include N,N-dimethylacetamide, N,N-dimethylformamide, N-methyl-2-pyrrolidone, 1,3-dimethyl-2-imidazolidinone, and dimethyl sulfoxide.

The polymerization reaction for preparing polyamic acid is preferably performed while stirring in a reaction vessel provided with a stirring device. Examples include: a method for producing polyamic acid in which the reaction is carried out by dissolving a predetermined amount of an aromatic diamine compound in the solvent and adding a tetracarboxylic dianhydride to the solvent while stirring; a method for producing polyamic acid in which the reaction is carried out by dissolving a tetracarboxylic dianhydride in the solvent and adding an aromatic diamine compound while stirring; and a method for producing polyamide acid in which the reaction is carried out by adding an aromatic diamine compound and a tetracarboxylic dianhydride alternately to the solvent.

While the temperature of the polymerization reaction for preparing polyamic acid is not limited, the polymerization reaction is preferably performed at a temperature from 0 to 70°C, more preferably from 10 to 60°C, and even more preferably from 20 to 50°C. When the polymerization reaction is performed within the ranges described above, a high molecular weight polyamic acid that is less colored and has excellent transparency can be produced.

In addition, while the aromatic diamine compound and tetracarboxylic dianhydride used in the polymerization for preparing polyamic acid are generally used in an equivalent amount, the molar ratio of the tetracarboxylic dianhydride to the aromatic diamine compound can be modified. That is, the molar amount of the tetracarboxylic dianhydride/the molar amount of the aromatic diamine compound, may be modified within a range from 0.95 to 1.05 so as to control the degree of polymerization of the resulting polyamic acid. The molar ratio of the tetracarboxylic dianhydride to the aromatic diamine compound is preferably in the range from 1.001 to 1.02, more preferably from 1.001 to 1.01. Making the tetracarboxylic dianhydride in a slight excess with respect to the aromatic diamine compound, as described above, can stabilize the degree of polymerization of the resulting polyamic acid, and can arrange a unit derived from the tetracarboxylic dianhydride to be placed at the end of the polymer. As a result, a polyimide that is less colored and has excellent transparency can be produced.

The concentration of the resulting polyamic acid solution is preferably adjusted to an appropriate value (for example, approximately from 10 to 30 mass%) so that the viscosity of the solution is properly maintained and thus the solution can be easily handled in a subsequent step.

An imidizing agent is added to the resulting polyamic acid solution and a chemical imidization reaction is carried out. Examples of the imidizing agent include carboxylic anhydrides such as acetic anhydride, propionic anhydride, succinic anhydride, phthalic anhydride, and benzoic anhydride; acetic anhydride is preferred from the perspective of cost and ease of removal after reaction. The equivalent weight of the imidizing agent to be used is greater than or equal to the equivalent weight of the amide bond of the polyamic acid that participates in the chemical imidization reaction, and is preferably from 1.1 to 5 times, more preferably from 1.5 to 4 times, the equivalent weight of the amide bond. The use of a slight excess of the imidizing agent with respect to the amide bond, as described above, facilitates the efficient imidization reaction even at a relatively low temperature.

Aliphatic, aromatic, or heterocyclic tertiary amines such as pyridine, picoline, quinoline, isoquinoline, trimethylamine, and triethylamine can be used as an imidization accelerator for the chemical imidization reaction. The use of these amines facilitates the efficient imidization reaction at a low temperature. As a result, coloration during the imidization reaction can be suppressed and a more transparent polyimide can be formed easily.

While the temperature of the chemical imidization reaction is not limited, the reaction is preferably performed at a temperature of 10°C or higher and lower than 50°C, and more preferably 15°C or higher and lower than 45°C. Performing the chemical imidization reaction at a temperature of 10°C or higher and lower than 50°C can suppress coloration during the imidization reaction, and a polyimide with excellent transparency can be formed.

Thereafter, if necessary, powder formation and drying are performed; the powder formation is carried out by adding a poor solvent for polyimide to the polyimide solution resulting from the chemical imidization reaction to precipitate the polyimide and form a powder.

The polyimide resin is preferably soluble in an organic solvent having a low boiling point such as benzene or methyl ethyl ketone. In particular, the polyimide resin is preferably soluble in methyl ethyl ketone. When the polyimide resin is soluble in methyl ethyl ketone, the resin can form a layer of the curable resin composition easily by coating and drying.

A polyimide resin containing a fluoro group is particularly preferable from the perspective that it is easily dissolved in a general-purpose organic solvent having a low boiling point such as methyl ethyl ketone, and that it facilitates formation of the base layer by a coating method.

The polyimide resin having a fluoro group preferably is an aromatic polyimide resin having a fluoro group in the molecule, and preferably has a skeleton represented by the following chemical formula in the molecule.

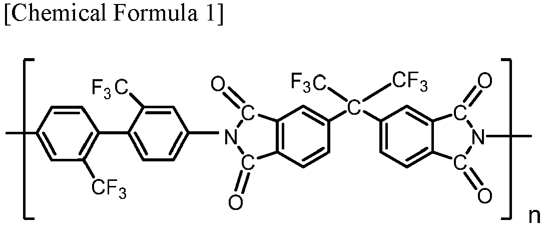

A polyimide resin having a skeleton represented by the above chemical formula has a very high Tg, which is higher than 300°C, due to the high rigidity of the skeleton described above. Therefore, heat resistance of the base layer can be greatly improved. **In** addition, the skeleton described above is straight and has a relatively high flexibility, readily increases the elongation at break of the base layer. Furthermore, due to its inclusion of a fluoro group, a polyimide resin having the skeleton described above can be dissolved in a general-purpose organic solvent having a low boiling point, such as methyl ethyl ketone. As a result, the base layer can be formed as a coating film by performing coating using a solution casting method, and removing the solvent by drying is also easy. A polyimide resin having the skeleton represented by the chemical formula above can be formed by the polymerization for preparing polyamic acid and imidization reaction described above using 2,2'-bis(trifluoromethyl)-4,4'-diaminobiphenyl and 4,4'-(1,1,1,3,3,3-hexafluoropropane-2,2-diyl)diphthalic acid dianhydride.

The polyarylate resin is a resin made from a polymer compound formed by the reaction between an aromatic diol and an aromatic dicarboxylic acid or a chloride of an aromatic dicarboxylic acid. Polyarylate resins also have a relatively high Tg and relatively good elongation properties. The polyarylate resin is not limited, and a known resin can be used.

Examples of the aromatic diol include: bis(hydroxyphenyl)alkanes, such as bis(4-hydroxyphenyl)methane [bisphenol F], bis(3-methyl-4-hydroxyphenyl)methane, 1,1-bis(4'-hydroxyphenyl)ethane, 1,1-bis(3'-methyl-4'-hydroxyphenyl)ethane, 2,2-bis(4'-hydroxyphenyl)propane [bisphenol A], 2,2-bis(3'-methyl-4'-hydroxyphenyl)propane, 2,2-bis(4'-hydroxyphenyl)butane, and 2,2-bis(4'-hydroxyphenyl)octane; bis(hydroxyphenyl)cycloalkanes, such as 1,1-bis(4'-hydroxyphenyl)cyclopentane, 1,1-bis(4'-hydroxyphenyl)cyclohexane [bisphenol Z], and 1,1-bis(4'-hydroxyphenyl)-3,3,5-trimethylcyclohexane; bis(hydroxyphenyl)phenylalkanes, such as bis(4-hydroxyphenyl)phenylmethane, bis(3-methyl-4-hydroxyphenyl)phenylmethane, bis(2,6-dimethyl-4-hydroxyphenyl)phenylmethane, bis(2,3,6-trimethyl-4-hydroxyphenyl)phenylmethane, bis(3-t-butyl-4-hydroxyphenyl)phenylmethane, bis(3-phenyl-4-hydroxyphenyl)phenylmethane, bis(3-fluoro-4-hydroxyphenyl)phenylmethane, bis(3-bromo-4-hydroxyphenyl)phenylmethane, bis(4-hydroxyphenyl)-4-fluorophenylmethane, bis(3-fluoro-4-hydroxyphenyl)-4-fluorophenylmethane, bis(4-hydroxyphenyl)-4-chlorophenylmethane, bis(4-hydroxyphenyl)-4-bromophenylmethane, bis(3,5-dimethyl-4-hydroxyphenyl)-4-fluorophenylmethane, 1,1-bis(4'-hydroxyphenyl)-1-phenylethane [bisphenol P], 1,1-bis(3'-methyl-4'-hydroxyphenyl)-1-phenylethane, 1,1-bis(3'-t-butyl-4'-hydroxyphenyl)-1-phenylethane, 1,1-bis(3'-phenyl-4'-hydroxyphenyl)-1-phenylethane, 1,1-bis(4'-hydroxyphenyl)-1-(4'-nitrophenyl)ethane, 1,1-bis(3'-bromo-4'-hydroxyphenyl)-1-phenylethane, 1,1-bis(4'-hydroxyphenyl)-1-phenylpropane, bis(4-hydroxyphenyl)diphenylmethane, and bis(4-hydroxyphenyl)dibenzylmethane; bis(hydroxyphenyl)ethers, such as bis(4-hydroxyphenyl)ether and bis(3-methyl-4-hydroxyphenyl)ether; bis(hydroxyphenyl)ketones, such as bis(4-hydroxyphenyl)ketone and bis(3-methyl-4-hydroxyphenyl)ketone; bis(hydroxyphenyl)sulfides, such as bis(4-hydroxyphenyl)sulfide and bis(3-methyl-4-hydroxyphenyl)sulfide; bis(hydroxyphenyl)sulfoxides, such as bis(4-hydroxyphenyl)sulfoxide and bis(3-methyl-4-hydroxyphenyl)sulfoxide; bis(hydroxyphenyl)sulfones, such as bis(4-hydroxyphenyl)sulfone [bisphenol S] and bis(3-methyl-4-hydroxyphenyl)sulfone; and bis(hydroxyphenyl)fluorenes, such as 9,9-bis(4'-hydroxyphenyl)fluorene and 9,9-bis(3'-methyl-4'-hydroxyphenyl)fluorene.

Examples of the aromatic dicarboxylic acid or the chloride of an aromatic dicarboxylic acid include phthalic acid, isophthalic acid, terephthalic acid, 4,4'-biphenyl dicarboxylic acid, diphenoxyethanedicarboxylic acid, diphenyl ether 4,4'-dicarboxylic acid, 4,4'-diphenyl sulfone dicarboxylic acid, 1,5-naphthalenedicarboxylic acid, and 2,6-naphthalenedicarboxylic acid, as well as chlorides of these compounds. Further, the polyarylate resin to be used may be a modified polyarylate resin. Of these, the polyarylate resin is preferably one made from a polymer compound obtained by the reaction between 2,2-bis(4'-hydroxyphenyl)propane and isophthalic acid.

The polymer component (A) can be used alone, or in a combination of two or more. Furthermore, the polymer component (A) and a polymer component (A'), the polymer component (A') having a glass transition temperature lower than 250°C, may be used in combination. Examples of the polymer component (A') include: a polyamide resin; and a polyarylate resin having a Tg lower than 250°C. A polyamide resin is preferable.

The polyamide resin is preferably soluble in an organic solvent, preferably a rubber-modified polyamide resin. Examples of the rubber-modified polyamide resin that can be used include one described in JP 2004-035638 A.

From the perspective of solvent resistance and the ability to adjust elongation properties, the polymer component (A) and the polymer component (A') are preferably made from a single type of polyimide resin, made from a plurality of polyimide resins of different types, or are a polyimide resin added with at least one selected from the group consisting of a polyamide resin and a polyarylate resin.

When adding a polyamide resin or a polyarylate resin, the polyarylate resin having a Tg lower than 250°C, to a polyimide resin, the amount of resin to be added is preferably no greater than 100 parts by mass, more preferably no more than 70 parts by mass, even more preferably no greater than 50 parts by mass, and further even more preferably no greater than 30 parts by mass, and preferably not less than 1 part by mass, more preferably not less than 3 parts by mass, per 100 parts by mass of the polyimide resin, from the perspective of imparting appropriate flexibility while maintaining a high Tg.

### (Curable monomer (B))

The curable monomer (B) has a polymerizable unsaturated bond and can participate in a polymerization reaction or a polymerization reaction and a crosslinking reaction. Note that in the present specification, "curing" refers to a broad concept including this "polymerization reaction of monomer" or "polymerization reaction of monomer and subsequent crosslinking reaction of polymer". The use of the curable monomer (B) can lead to formation of a gas barrier laminate having excellent solvent resistance.

When the base layer is formed from a cured product of a curable resin composition containing the polymer component (A) and the curable monomer (A) described above, the thin base layer having excellent heat resistance can be easily formed. In addition, when such a material is used, there is no optical problem caused by materials having anisotropic molecular orientation, such as polyester films that are commonly used as substrates for gas barrier laminates. Because the Tg of the polymer component is 250°C or higher, the base layer has heat resistance. As such, when the gas barrier layer is formed of a coating film, deterioration of the performance of the gas barrier layer due to, for example, deformation of the base layer caused by heat during application of the coating film, is suppressed.

The molecular weight of the curable monomer (B) is usually 3000 or less, preferably from 200 to 2000, and more preferably from 200 to 1000.

The number of polymerizable unsaturated bonds in the curable monomer (B) is not limited. The curable monomer (B) comprises a monofunctional (meth)acrylic acid derivative a polyfunctional (meth)acrylic acid derivative.

The monofunctional (meth)acrylic acid derivative is not limited, and a known compound can be used. Examples of the monofunctional (meth)acrylic acid derivative include a monofunctional (meth)acrylic acid derivative having a nitrogen atom, a monofunctional (meth)acrylic acid derivative having an alicyclic structure, and a monofunctional (meth)acrylic acid derivative having a polyether structure.

Examples of the monofunctional (meth)acrylic acid derivative having a nitrogen atom include a compound represented by the following formula. 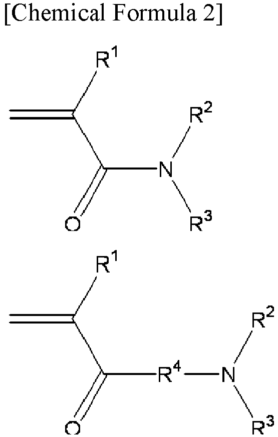 where R¹ represents a hydrogen atom or an alkyl group having from 1 to 6 carbons; R² and R³ each independently represents a hydrogen atom or an organic group having from 1 to 12 carbons, and R² and R³ may bond to form a ring structure; and R⁴ represents a divalent organic group.

Examples of the alkyl group having from 1 to 6 carbons represented by R¹ include a methyl group, an ethyl group, and a propyl group, of which a methyl group is preferable.

Examples of the organic group having from 1 to 12 carbons represented by R² and R³ include: an alkyl group having from 1 to 12 carbons, such as a methyl group, an ethyl group, and a propyl group; a cycloalkyl group having from 3 to 12 carbons, such as a cyclopentyl group and a cyclohexyl group; and an aromatic group having from 6 to 12 carbons, such as a phenyl group, a biphenyl group, and a naphthyl group. These groups may have a substituent at any position. Additionally, R² and R³ may bond together to form a ring, and the ring may further contain a nitrogen atom or an oxygen atom in the skeleton.

Examples of the divalent organic group represented by R⁴ include groups represented by -(CH₂)ₘ- and -NH-(CH₂)ₘ-. Here, m is an integer from 1 to 10.

Among these, a preferred example of the monofunctional (meth)acrylic acid derivative having a nitrogen atom is a (meth)acryloyl morpholine represented by the following formula.

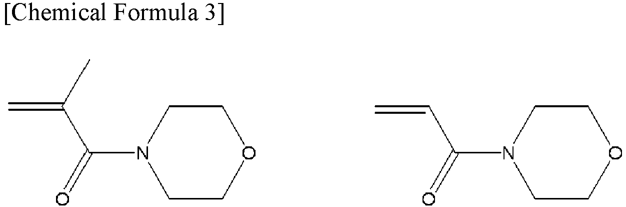

The use of a monofunctional (meth)acrylic acid derivative having a nitrogen atom as the curable monomer (B)can lead to formation of a base layer having superior heat resistance.

Examples of the monofunctional (meth)acrylic acid derivative having an alicyclic structure include a compound represented by the following formula. 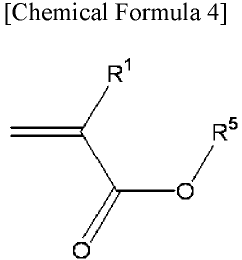 where R¹ represents the same as described above, while R⁵ represents a group having an alicyclic structure.

Examples of the group having an alicyclic structure represented by R⁵ include a cyclohexyl group, an isobornyl group, a 1-adamantyl group, a 2-adamantyl group, and a tricyclodecanyl group.

Specific examples of the monofunctional (meth)acrylic acid derivative having an alicyclic structure include isobornyl(meth)acrylate, cyclohexyl(meth)acrylate, 1-adamantyl(meth)acrylate, and 2-adamantyl(meth)acrylate.

The use of a monofunctional (meth)acrylic acid derivative having an alicyclic structure as the curable monomer (B) can lead to formation of a base layer having a better optical property.

Examples of the monofunctional (meth)acrylic acid derivative having a polyether structure include a compound represented by the following formula.

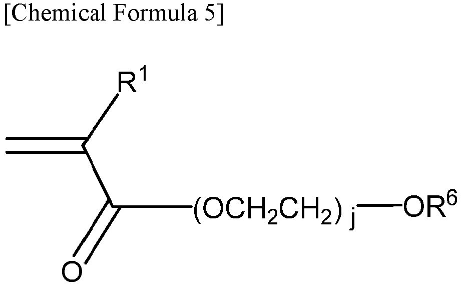

In the formula, R¹ represents the same as described above, while R⁶ represents an organic group having from 1 to 12 carbons. Examples of the organic group having from 1 to 12 carbons represented by R⁶ include: an alkyl group having from 1 to 12 carbons, such as a methyl group, an ethyl group, and a propyl group; a cycloalkyl group having from 3 to 12 carbons, such as a cyclohexyl group; and an aromatic group having from 6 to 12 carbons, such as a phenyl group, a biphenyl group, and a naphthyl group. j represents an integer from 2 to 20.

Specific examples of monofunctional (meth)acrylic acid derivative having a polyether structure include ethoxylated o-phenylphenol(meth)acrylate, methoxypolyethylene glycol (meth)acrylate, and phenoxypolyethylene glycol (meth)acrylate.

The use of a monofunctional (meth)acrylic acid derivative having a polyether structure as the curable monomer (B) can lead to formation of a base layer having excellent toughness.

The polyfunctional (meth)acrylic acid derivative is not limited, and a known compound can be used. Examples of the polyfunctional (meth)acrylic acid derivative include a bifunctional to hexafunctional (meth)acrylic acid derivative.

Examples of the bifunctional (meth)acrylic acid derivative include a compound represented by the following formula. 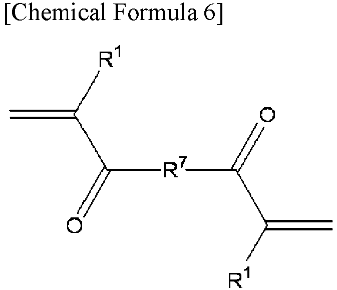 where R¹ represents the same as described above, while R⁷ represents a divalent organic group. Examples of the divalent organic group represented by R⁷ include groups represented by the following formula. 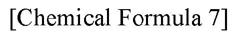 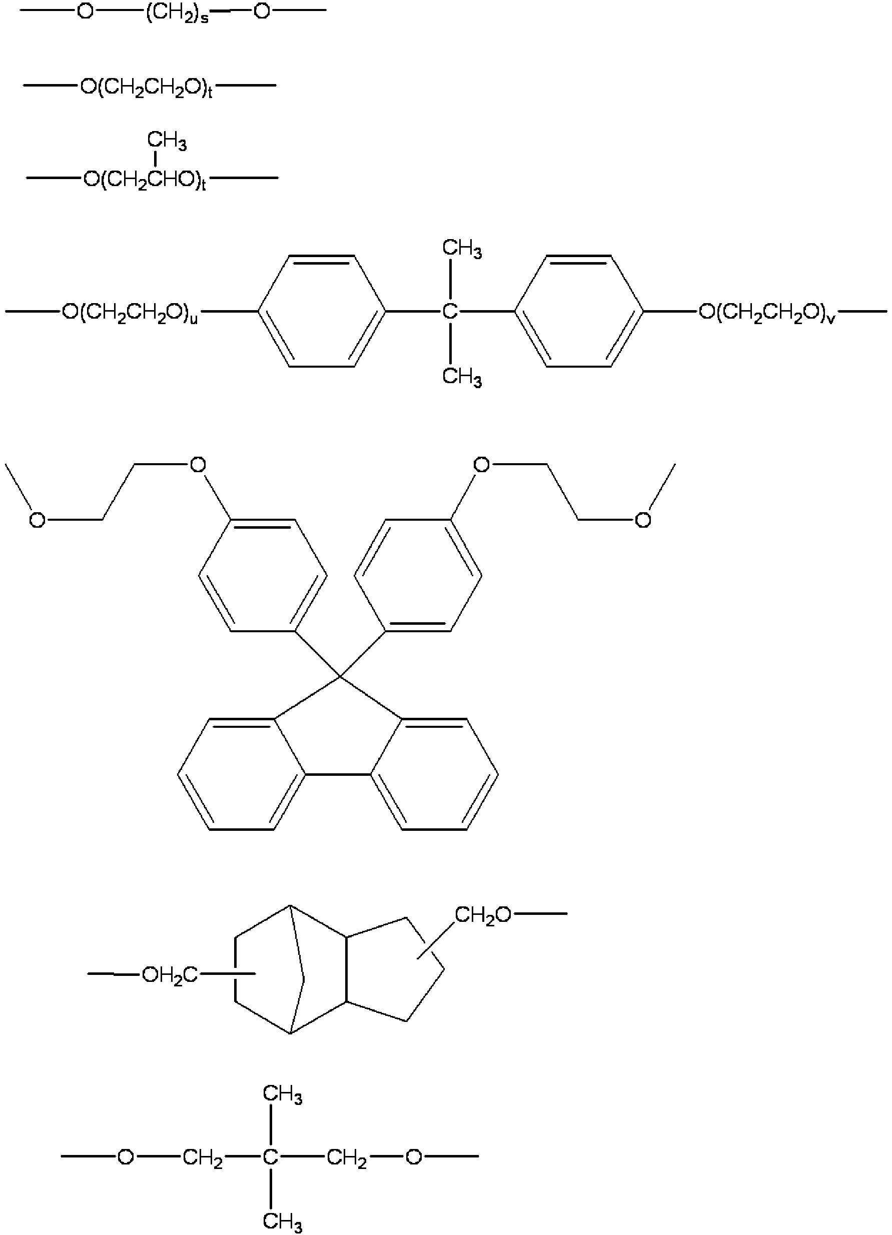 where s represents an integer from 1 to 20, t represents an integer from 1 to 30, u and v each independently represents an integer from 1 to 30, and the "-" at both ends represents a bond.

Specific examples of the bifunctional (meth)acrylic acid derivative represented by the formula above include: tricyclodecane dimethanol di(meth)acrylate, polyethylene glycol di(meth)acrylate, propoxylated ethoxylated bisphenol A di(meth)acrylate, ethoxylated bisphenol A di(meth)acrylate, 1,10-decanediol di(meth)acrylate, 1,6-hexanediol di(meth)acrylate, and 9,9-bis[4-(2-acryloyloxyethoxy)phenyl]fluorene. Among these, the followings are preferred from the perspective of heat resistance and toughness: a bifunctional (meth)acrylic acid derivative represented by the formula above wherein the divalent organic group represented by R⁷ has a tricyclodecane skeleton, such as tricyclodecane dimethanol di(meth)acrylate; a bifunctional (meth)acrylic acid derivative represented by the formula above wherein the divalent organic group represented by R⁷ has a bisphenol skeleton, such as propoxylated ethoxylated bisphenol A di(meth)acrylate and ethoxylated bisphenol A di(meth)acrylate; and a bifunctional (meth)acrylic acid derivative represented by the formula above wherein the divalent organic group represented by R⁷ has a 9,9-bisphenylfluorene skeleton, such as 9,9-bis[4-(2-acryloyloxyethoxy)phenyl]fluorene.

Additional examples of the bifunctional (meth)acrylic acid derivative include neopentyl glycol adipate di(meth)acrylate, hydroxypivalic acid neopentyl glycol di(meth)acrylate, caprolactone-modified dicyclopentenyl di(meth)acrylate, ethylene oxide-modified phosphoric acid di(meth)acrylate, di(acryloxyethyl) isocyanurate, and allylated cyclohexyl di(meth)acrylate.

Examples of the trifunctional (meth)acrylic acid derivative include trimethylolpropane tri(meth)acrylate, pentaerythritol tri(meth)acrylate, propionic acid-modified dipentaerythritol tri(meth)acrylate, propylene oxide-modified trimethylolpropane tri(meth)acrylate, and tris(acryloxyethyl) isocyanurate.

Examples of the tetrafunctional (meth)acrylic acid derivative include pentaerythritol tetra(meth)acrylate.

Examples of the pentafunctional (meth)acrylic acid derivative include propionic acid-modified dipentaerythritol penta(meth)acrylate.

Examples of the hexafunctional (meth)acrylic acid derivative include dipentaerythritol hexa(meth)acrylate and caprolactone-modified dipentaerythritol hexa(meth)acrylate.

A cyclopolymerization monomer may also be used as the curable monomer (B). A cyclopolymerization monomer is a monomer having the property of undergoing cyclization and radical polymerization at the same time. Examples of the cyclopolymerization monomer include a non-conjugated diene, such as α-allyloxymethylacrylic acid-based monomers, preferably an alkyl ester having from 1 to 4 carbons of 2-allyloxymethyl acrylic acid and cyclohexyl 2-allyloxymethyl acrylate, more preferably an alkyl ester having from 1 to 4 carbons of 2-allyloxymethyl acrylic acid, and even more preferably methyl 2-(allyloxymethyl) acrylate.

The curable monomer (B) can be used alone or in a combination of two or more. Of these, the curable monomer (B) is preferably a polyfunctional (meth)acrylic acid from the perspective that the resulting base layer has better heat resistance and solvent resistance and it is easy to mix with the polymer component (A) and that curing shrinkage of the polymer is unlikely to occur while curling of the cured product can be suppressed.

The curable monomer (B) more preferably contains a polyfunctional (meth)acrylate compound and a cyclopolymerization monomer. By using a polyfunctional (meth)acrylate compound and a cyclopolymerization monomer in combination, it becomes easy to adjust the elongation at break of the base layer to the ranges described above while adjusting the heat resistance of the base layer as appropriate.

When the curable monomer (B) contains a polyfunctional (meth)acrylic acid, the content thereof is preferably 40 mass% or greater, more preferably from 50 to 100 mass%, of the total mass of the curable monomer (B).

### (Curable resin composition)

The curable resin composition being used to form the base layer according to an embodiment of the present invention can be prepared by mixing the polymer component (A), the curable monomer (B), and, optionally, a polymerization initiator or another component described below, and dissolving or dispersing the mixture in a suitable solvent.

The total content of the polymer component (A) and the curable monomer (B) in the curable resin composition is preferably from 40 to 99.5 mass%, more preferably from 60 to 99 mass%, and even more preferably from 80 to 98 mass%, of the total mass of the curable resin composition excluding the solvent.

The content of the polymer component (A) and the curable monomer (B) in the curable resin composition is, in terms of a mass ratio of the polymer component (A) to the curable monomer (B), preferably from 30:70 to 90: 10, and more preferably from 35:65 to 80:20.

When the mass ratio of the polymer component (A) to the curable monomer (B) in the curable resin composition is in such a range, the flexibility of the resulting base layer tends to improve, and the solvent resistance of the base layer tends to be easily retained.

Furthermore, when the content of the curable monomer (B) in the curable resin composition is within the ranges described above, the solvent can be efficiently removed when the base layer is formed by, for example, a solution casting method. As a result, deformation such as curling and waviness due to the prolonged time of the drying process is eliminated.

When a plurality of resins having different solvent solubility are used in combination as the polymer component (A), such as a combination of a polyimide resin and a polyamide resin or a polyarylate resin described above, it is preferable to first dissolve the resins in their corresponding suitable solvents separately, and then add a solution, in which one resin is dissolved, to an organic solvent having a low boiling point, in which another resin is dissolved.

The curable resin composition can optionally contain a polymerization initiator. The polymerization initiator is not limited as long as it is one that initiates a curing reaction. Examples of the polymerization initiator include a thermal polymerization initiator and a photopolymerization initiator.

Examples of the thermal polymerization initiator include an organic peroxide and an azo compound.

Examples of the organic peroxide include: dialkyl peroxides, such as di-t-butyl peroxide, t-butyl cumyl peroxide, and dicumyl peroxide; diacyl peroxides, such as acetyl peroxide, lauroyl peroxide, and benzoyl peroxide; ketone peroxides, such as methyl ethyl ketone peroxide, cyclohexanone peroxide, 3,3,5-trimethylcyclohexanone peroxide, and methyl cyclohexanone peroxide; peroxy ketals, such as 1,1-bis(t-butylperoxy)cyclohexane; hydroperoxides, such as t-butyl hydroperoxide, cumene hydroperoxide, 1,1,3,3-tetramethylbutyl hydroperoxide, p-menthane hydroperoxide, diisopropylbenzene hydroperoxide, and 2,5-dimethylhexane-2,5-dihydroperoxide; and peroxy esters, such as t-butyl peroxyacetate, t-butyl peroxy-2-ethylhexanoate, t-butyl peroxybenzoate, and t-butylperoxy isopropyl carbonate.

Examples of the azo compound include 2,2'-azobis(4-methoxy-2,4-dimethylvaleronitrile), 2,2'-azobis(2-cyclopropylpropionitrile), 2,2'-azobis(2,4-dimethylvaleronitrile), azobisisobutyronitrile, 2,2'-azobis(2-methylbutyronitrile), 1,1'-azobis(cyclohexane-1-carbonitrile), 2-(carbamoylazo)isobutyronitrile, and 2-phenylazo-4-methoxy-2,4-dimethylvaleronitrile.

Examples of the photopolymerization initiator include: alkylphenone-based photopolymerization initiators, such as 2,2-dimethoxy-1,2-diphenylethan-1-one, 1-hydroxy-cyclohexyl-phenyl ketone, 2-hydroxy-2-methyl-1-phenyl-propan-1-one, 1-[4-(2-hydroxyethoxy)-phenyl]-2-hydroxy-2-methyl-1-propan-1-one, 2-hydroxy-1-[4-[4-(2-hydroxy-2-methyl-propionyl)-benzyl]phenyl]-2-methyl-propan-1-one, 2-methyl-1-(4-methylthiophenyl)-2-morpholinopropane-1-one, 2-benzyl-2-dimethylamino-1-(4-morpholinophenyl)-butanone-1, and 2-(dimethylamino)-2-[(4-methylphenyl)methyl]-1-[4-(4-morpholinyl)phenyl]-1-butanone; phosphorus-based photopolymerization initiators, such as 2,4,6-trimethylbenzoyl-diphenylphosphineoxide, bis(2,4,6-trimethylbenzoyl)-phenylphosphineoxide, ethyl(2,4,6-trimethylbenzoyl)-phenylphosphinate, and bis(2,6-dimethoxybenzoyl)-2,4,4-trimethyl-pentylphosphine oxide; titanocene-based photopolymerization initiators, such as bis(η5-2,4-cyclopentadiene-1-yl)-bis[2,6-difluoro-3-(1H-pyrrol-1-yl)-phenyl] titanium; oxime ester-based photopolymerization initiators, such as 1,2-octanedione-1-[4-(phenylthio)-2-(O-benzoyloxyme)] and ethanone-1-[9-ethyl-6-(2-methylbenzoyl)-9H-carbazole-3-yl]-1-(O-acetyloxyme); benzophenone-based photopolymerization initiators, such as benzophenone, p-chlorobenzophenone, benzoylbenzoic acid, methyl o-benzoylbenzoate, 4-methylbenzophenone, 4-phenylbenzophenone, hydroxybenzophenone, acrylated benzophenone, 4-benzoyl-4'-methyl-diphenyl sulfide, 3,3'-dimethyl-4-methoxybenzophenone, 2,4,6-trimethylbenzophenone, and 4-(13-acryloyl-1,4,7,10,13-pentaoxatridecyl)-benzophenone; and thioxanthone-based photopolymerization initiators, such as thioxanthone, 2-chlorothioxanthone, 3-methylthioxanthone, 2,4-dimethylthioxanthone, 2,4-diisopropylthioxanthone, 2,4-dichlorothioxanthone, 1-chloro-4-propoxythioxanthone, 2-methylthioxanthone, 2-isopropylthioxanthone, and 4-isopropylthioxanthone.

Among the photopolymerization initiators described above, phosphorus-based photopolymerization initiators, such as 2,4,6-trimethylbenzoyl-diphenylphosphineoxide, bis(2,4,6-trimethylbenzoyl)-phenylphosphineoxide, ethyl(2,4,6-trimethylbenzoyl)-phenylphosphinate, and bis(2,6-dimethoxybenzoyl)-2,4,4-trimethyl-pentylphosphine oxide, are preferred.

When the polymer component (A) is a thermoplastic resin having an aromatic ring, the polymer component (A) absorbs ultraviolet light and, as a result, curing reaction may be difficult to occur. However, the use of a phosphorous-based photopolymerization initiator described above facilitates efficient curing reaction by utilizing light having a wavelength that is not absorbed by the polymer component (A).

The polymerization initiator can be used alone or in a combination of two or more.

The content of the polymerization initiator is preferably from 0.05 to 15 mass%, more preferably from 0.05 to 10 mass%, and even more preferably from 0.05 to 5 mass%, of the total amount of the curable resin composition.

In addition to the polymer component (A), the curable monomer (B), and the polymerization initiator, the curable resin composition may also contain a photopolymerization initiator aid, such as triisopropanolamine and 4,4'-diethylaminobenzophenone.

The solvent used to prepare the curable resin composition is not limited, and examples include: aliphatic hydrocarbon solvents, such as n-hexane and n-heptane; aromatic hydrocarbon solvents, such as toluene and xylene; halogenated hydrocarbon solvents, such as dichloromethane, ethylene chloride, chloroform, carbon tetrachloride, 1,2-dichloroethane, and monochlorobenzene; alcohol-based solvents, such as methanol, ethanol, propanol, butanol, and propylene glycol monomethyl ether; ketone solvents, such as acetone, methyl ethyl ketone, 2-pentanone, isophorone, and cyclohexanone; ester-based solvents, such as ethyl acetate and butyl acetate; cellosolve solvents, such as ethyl cellosolve; and an ether-based solvent, such as 1,3-dioxolane.

The content of the solvent in the curable resin composition is not limited, but is usually from 0.1 to 1000 g, preferably from 1 to 100 g, per 1 g of the polymer component (A). As the amount of the solvent is adjusted appropriately, the viscosity of the curable resin composition can be adjusted to an appropriate value.

Furthermore, the curable resin composition may further contain a known additive such as a plasticizer, an antioxidant, and an ultraviolet absorber, within a range that does not impair the object and effect of the present invention.

The method for curing the curable resin composition can be determined according to the polymerization initiator or curable monomer used. The details are described in the session of a method for manufacturing a gas barrier laminate below.

### (Properties of base layer)

The thickness of the base layer is not limited and may be determined according to the purpose of the gas barrier laminate. The thickness of the base layer is typically from 0.1 to 300 µm, preferably from 0.1 to 100 µm, more preferably from 0.1 to 50 µm, even more preferably from 0.1 to 10 µm, and particularly preferably from 0.2 to 10 µm.

When the thickness of the base layer is, for example, approximately from 0.1 to 10 µm, it can prevent the thickness of the gas barrier laminate from increasing, and the gas barrier laminate can be a thin gas barrier laminate. A thin gas barrier laminate is preferable for it will not become a factor that increases the overall thickness of a device to which the thin gas barrier laminate is applied, the device being an application such as an organic EL display of which a small thickness is desirable. Furthermore, when the gas barrier laminate is a thin gas barrier laminate, the flexibility and bending resistance of the gas barrier laminate after the gas barrier laminate has been implemented can be improved.

As described above, the base layer of the gas barrier laminate according to an embodiment of the present invention is formed of a cured product of a curable resin composition containing the polymer component (A), which has a Tg of 250°C or higher, and the curable monomer (B). Since the base layer has a superior heat resistance, a gas barrier laminate having excellent heat resistance can be obtained.

In particular, in a case where the gas barrier laminate is formed through a production process involving heating after the formation of the base layer, for example, a gas barrier layer being formed on the base layer by coating and drying by heating, insufficient heat resistance of the base layer may result in an insufficient gas barrier property of the resulting gas barrier layer. One of the reasons, although not the only reason, may be that, when the heat resistance of the base layer is low, the elastic modulus at a high temperature is reduced and the base layer undergoes heat shrinkage, and consequently, fine cracks may be generated in the gas barrier layer, leading to deterioration in gas barrier property. Another possibility is that, when the heat resistance of the base layer is low, the boundary at the interface between the base layer and the gas barrier layer may become indistinct, and this phenomenon may be related to the generation of cracks in the gas barrier layer.

The base layer has excellent solvent resistance. Due to this excellent solvent resistance, even when, for example, an organic solvent is used to form another layer on a surface of the base layer, the surface of the base layer hardly dissolves. Therefore, even when the gas barrier layer is formed on a surface of the base layer using a resin solution containing an organic solvent, a gas barrier property is less likely to deteriorate because the components of the base layer are less likely to mix with the gas barrier layer.

From this perspective, the gel fraction of the base layer is preferably 90% and greater, more preferably 94% or greater. When the base layer has a gel fraction of 90% or greater, the base layer has excellent solvent resistance. As a result, even when an organic solvent is used to form another layer on a surface of the base layer by coating, the surface of the base layer hardly dissolves, and a gas barrier laminate having excellent solvent resistance can be easily obtained.

Here, the gel fraction is determined as described here: wrapping a base layer cut to 100 mm × 100 mm by a 150 mm × 150 mm nylon mesh (# 120), the mass of the nylon mesh having been measured in advance, and immersing the base layer wrapped by the nylon mesh in toluene (100 mL) for 3 days; after taking the base layer out, drying the base layer for one hour at 120°C, leaving the base layer to stand for 3 hours at 23°C and 50% relative humidity to condition the base layer, measuring the mass of the base layer, and calculating the gel fraction in accordance with the following formula. Gel fraction (%) = [(mass of remaining resin after immersion)/(mass of resin before immersion)] × 100

The base layer has excellent interlayer adhesion with the gas barrier layer. In other words, the gas barrier layer can be formed on the base layer without the provision of an anchor coat layer.

The base layer is preferably colorless and transparent. By making the base layer colorless and transparent, the gas barrier laminate according to an embodiment of the present invention can be preferably used in an optical application.

The base layer has a low birefringence and excellent optical isotropy. The in-plane retardation of the base layer is typically not greater than 20 nm, preferably not greater than 15 nm. The retardation in the thickness direction is typically not greater than -500 nm, preferably not greater than -450 nm. In addition, birefringence, the value obtained by dividing the in-plane retardation by the thickness of the base layer, is typically not greater than 100 × 10⁻⁵, preferably not greater than 20 × 10⁻⁵.

When the in-plane retardation, retardation in the thickness direction, and birefringence of the base layer are within the ranges described above, a gas barrier laminate having a low birefringence and excellent optical isotropy can be obtained, and the gas barrier laminate according to an embodiment of the present invention can be desirably used in an optical application.

The elongation at break of the base layer is preferably not less than 2.5%, more preferably not less than 2.6%, and even more preferably not less than 2.7%. When the elongation at break of the base layer is not less than 2.5%, the elongation at break of the gas barrier laminate can be easily adjusted to approximately not less than 2%, and as a result, a gas barrier laminate having excellent flexibility can be easily obtained.

The tensile elastic modulus of the base layer at 130°C is preferably 1.0 × 10³ MPa or greater, 1.3 × 10³ MPa or greater, more preferably 1.5 × 10³ MPa or greater, and even more preferably 2.0 × 10³ MPa or greater. When the tensile elastic modulus of the base layer at 130°C is 1.3 × 10³ MPa or greater, the heat resistance of the base layer can be increased, and it becomes easy to reduce the water vapor transmission rate of the gas barrier laminate, specifically, not greater than 1.0 × 10⁻² (g · m⁻² · day⁻¹).

As described above, the base layer has excellent heat resistance, solvent resistance, interlayer adhesion, and transparency, and also has low birefringence and excellent optical isotropy. Thus, as described below, formation of the gas barrier layer on the base layer having such characteristics by, for example, a solution casting method, realizes an excellent gas barrier property in the gas barrier layer. This can also prevent a gas barrier property from being impaired by either heat or solvent, or both, due to either heat resistance or solvent resistance, or both, of the base layer. Furthermore, the resulting gas barrier laminate has excellent heat resistance, interlayer adhesion, and transparency. In addition, a gas barrier laminate having low birefringence and excellent optical isotropy can be obtained.

### (1-2. Gas barrier layer)

The gas barrier layer of the gas barrier laminate according to an embodiment of the present invention is not limited as long as the gas barrier layer has a gas barrier property. Examples include a gas barrier layer formed of an inorganic film, a gas barrier layer containing a gas barrier resin, and a gas barrier layer formed by modifying a layer containing a polymer compound.

Of these, the gas barrier layer is preferably a gas barrier layer formed of an inorganic film and a gas barrier layer formed by modifying a layer containing a polymer compound, from the perspective of capability to efficiently form a thin layer having excellent gas barrier property and solvent resistance.

The inorganic film is not limited, and examples include an inorganic vapor deposition film.

Examples of the inorganic vapor deposition film include an inorganic compound vapor deposition film or a metal vapor deposition film.

Examples of a raw material of the inorganic compound vapor deposition film include: inorganic oxides, such as silicon oxide, aluminum oxide, magnesium oxide, zinc oxide, indium oxide, and tin oxide; inorganic nitrides, such as silicon nitride, aluminum nitride; and titanium nitride; inorganic carbides; inorganic sulfides; inorganic oxynitrides, such as silicon oxynitride; inorganic oxycarbides; inorganic carbonitrides; and inorganic oxycarbonitrides.

Examples of a raw material of the metal vapor deposition film include aluminum, magnesium, zinc, and tin.

These raw materials can be used alone or in a combination of two or more.

Among these, an inorganic vapor deposition film made from an inorganic oxide, an inorganic nitride, or a metal is preferable from the perspective of gas barrier property; furthermore, an inorganic vapor deposition film made from an inorganic oxide or an inorganic nitride is preferable from the perspective of transparency. In addition, the inorganic vapor deposition film may have a single layer or multiple layers.

The thickness of the inorganic vapor deposition film is preferably in the range from 10 to 2000 nm, more preferably from 20 to 1000 nm, further preferably from 30 to 500 nm, and even more preferably from 40 to 200 nm, from the perspective of gas barrier property and handling property.

Examples of the method for forming the inorganic vapor deposition film include a physical vapor deposition (PVD) method, such as vacuum deposition, sputtering, and ion plating, or a chemical vapor deposition (CVD) method, such as thermal CVD, plasma CVD, and optical CVD.

For the gas barrier layer containing a gas barrier resin, the gas barrier resin for use may be a resin, through which oxygen and the like hardly permeates, and the examples include a polyvinyl alcohol or a partially saponified product of a polyvinyl alcohol, an ethylene-vinyl alcohol copolymer, polyacrylonitrile, polyvinyl chloride, polyvinylidene chloride, and polychlorotrifluoroethylene.

The thickness of the gas barrier layer containing a gas barrier resin is preferably in the range of from 10 to 2000 nm, more preferably from 20 to 1000 nm, further preferably from 30 to 500 nm, and even more preferably from 40 to 200 nm, from the perspective of gas barrier property.

Examples of the method for forming the gas barrier layer containing a gas barrier resin include a method of coating the base layer with a solution containing a gas barrier resin and drying the resulting coating film as appropriate.

For the gas barrier layer formed by modification of a layer containing a polymer compound (hereafter also referred to as a "polymer layer"), examples of the polymer compound for use include a silicon-containing polymer compound, polyimide, polyamide, polyamide-imide, polyphenylene ether, polyether ketone, polyether ether ketone, polyolefin, polyester, polycarbonate, polysulfone, polyethersulfone, polyphenylene sulfide, polyarylate, acrylic resin, cycloolefin polymer, and aromatic polymer. These polymer compounds can be used alone or in a combination of two or more.

Among these, the polymer compound is preferably a silicon-containing polymer compound. Examples of the silicon-containing polymer compound include: a polysilazane-based compound (see JP 63-16325 B, JP 62-195024 A, JP 63-81122 A, JP 1-138108 A, JP 2-84437 A, JP 2-175726 A, JP 4-63833 A, JP 5-238827 A, JP 5-345826 A, JP 2005-36089 A, JP 6-122852 A, JP 6-299118 A, JP 6-306329 A, JP 9-31333 A, JP 10-245436 A, JP 2003-514822 T, and WO 2011/107018); a polycarbosilane-based compound (see Journal of Materials Science, 2569-2576, Vol.13, 1978; Organometallics, 1336-1344, Vol.10, 1991; Journal of Organometallic Chemistry, 1-10, Vol.521, 1996; JP 51-126300 A, JP 2001-328991 A, JP 2006-117917 A, JP 2009-286891 A, and JP 2010-106100 A); a polysilane-based compound [R. D. Miller, J. Michl; Chemical Review, Vol 89, Page 1359 (1989), N. Matsumoto; Japanese Journal of Physics, Vol. 37, Page 5425 (1998); and JP 2008-63586 A, and JP 2009-235358 A]; and a polyorganosiloxane-based compound (see JP 2010-229445 A, JP 2010-232569 A, and JP 2010-238736 A).

Of these, a polysilazane-based compound is preferable from the perspective of capability to form a gas barrier layer having excellent gas barrier property. Examples of the polysilazane-based compound include an inorganic polysilazane and an organic polysilazane. Examples of the inorganic polysilazane include perhydropolysilazane, and examples of the organic polysilazane include a compound in which some or all of the hydrogen in perhydropolysilazane is substituted with an organic group such as an alkyl group. Of these, an inorganic polysilazane is more preferable from the perspective of ease of access and being able to form a gas barrier layer having excellent gas barrier property.

Further, as the polysilazane compound, a commercially available product sold as a glass coating material or the like can be used as it is.

The polysilazane compounds can be used alone or in a combination of two or more.

In addition to the polymer compound described above, the polymer layer may contain another component within a range that does not inhibit the object of the present invention. Examples of the other component include a curing agent, another polymer, an anti-aging agent, a light stabilizer, and a flame retardant.

The content of the polymer compound in the polymer layer is preferably not less than 50 mass%, more preferably not less than 70 mass%, from the perspective of capability to form a gas barrier layer having excellent gas barrier property.

Examples of the method for forming the polymer layer include a method including: coating a layer-forming solution on the base layer or a primer layer optionally formed on the base layer by a known method, the layer-forming solution containing at least one polymer compound, another component optionally, and a solvent; and drying the resulting coating film as appropriate to from a polymer layer.

When applying the layer-forming solution, a known device such as a spin coater, a knife coater, and a gravure coater can be used.

It is preferable to, for example, heat the coating film in order to dry the obtained coating film or to improve the gas barrier property of the gas barrier laminate. A known drying method such as hot air drying, hot roll drying, and infrared irradiation, can be used as the heating and drying method. The heating temperature is typically from 80 to 150°C, and the heating time is typically from tens of seconds to tens of minutes.

During the formation of the gas barrier layer of the gas barrier laminate, when, for example, a polysilazane-based compound as described above is used, a polysilazane conversion reaction occurs by heating after coating, resulting in a coating film having excellent gas barrier property.

Meanwhile, when a base layer having low heat resistance is used, heating during the formation of such a coating film may result in deformation of the base layer. Deformation of the base layer can adversely affect the gas barrier property of the gas barrier layer of the gas barrier laminate. However, because the base layer according to an embodiment of the present invention has excellent heat resistance, deformation does not easily occur even during coating and heating after coating. Therefore, the use of the base layer can avoid deterioration of gas barrier property of the gas barrier laminate caused by deformation of the base layer.

The thickness of the polymer layer is typically from 20 to 1000 nm, preferably from 30 to 800 nm, more preferably from 40 to 400 nm.

Even if the thickness of the polymer layer is in the order of nanometers, a gas barrier laminate having sufficient gas barrier performance can be obtained by performing a modification treatment as described below.

Examples of the modification treatment include ion implantation and vacuum ultraviolet light irradiation. Among these, ion implantation is preferable from the perspective of being able to obtain high gas barrier performance. **In** ion implantation, the dose of ions implanted into the polymer layer may be determined as appropriate according to the purpose of the gas barrier laminate to be formed (necessary gas barrier property, transparency, and the like).

Examples of the ions to be implanted include: ions of noble gases such as argon, helium, neon, krypton, and xenon; ions of fluorocarbon, hydrogen, nitrogen, oxygen, carbon dioxide, chlorine, fluorine, and sulfur; ions of alkane gases such as methane, ethane, propane, butane, pentane, and hexane; ions of alkene gases such as ethylene, propylene, butene, and pentene; ions of alkadiene gases such as pentadiene and butadiene; ions of alkyne gases such as acetylene and methyl acetylene; ions of aromatic hydrocarbon gases such as benzene, toluene, xylene, indene, naphthalene, and phenanthrene; ions of cycloalkane gases such as cyclopropane and cyclohexane; ions of cycloalkene gases such as cyclopentene and cyclohexene; ions of conductive metals such as gold, silver, copper, platinum, nickel, palladium, chromium, titanium, molybdenum, niobium, tantalum, tungsten, and aluminum; and ions of silane (SiH₄) or an organosilicon compound.

Examples of the organosilicon compound include: a tetraalkoxysilane, such as tetramethoxysilane, tetraethoxysilane, tetra-n-propoxysilane, tetraisopropoxysilane, tetra-n-butoxysilane, and tetra-t-butoxysilane;
an alkylalkoxysilane unsubstituted or having a substituent, such as dimethyldimethoxysilane, dimethyldiethoxysilane, diethyldimethoxysilane, methyltriethoxysilane, ethyltrimethoxysilane, and (3,3,3-trifluoropropyl)trimethoxysilane;
an arylalkoxysilane, such as diphenyldimethoxysilane and phenyltriethoxysilane;
a disiloxane, such as hexamethyldisiloxane (HMDSO);
an aminosilane, such as bis(dimethylamino)dimethylsilane, bis(dimethylamino)methylvinylsilane, bis(ethylamino)dimethylsilane, diethylaminotrimethylsilane, dimethylaminodimethylsilane, tetrakis dimethylamino silane, and tris(dimethylamino)silane;
a silazane, such as hexamethyldisilazane, hexamethylcyclotrisilazane, heptamethyldisilazane, nonamethyltrisilazane, octamethylcyclotetrasilazane, and tetramethyldisilazane;
a cyanatosilane, such as tetraisocyanatosilane;
a halogenosilane, such as triethoxyfluorosilane;
an alkenylsilane, such as diallyldimethylsilane and allyltrimethylsilane;
an alkylsilane unsubstituted or having a substituent, such as di-t-butylsilane, 1,3-disilabutane, bis(trimethylsilyl)methane, tetramethylsilane, tris(trimethylsilyl)methane, tris(trimethylsilyl)silane, and benzyltrimethylsilane;
a silyl alkyne, such as bis(trimethylsilyl)acetylene, trimethylsilylacetylene, and 1-(trimethylsilyl)-1-propyne;
a silyl alkene, such as 1,4-bistrimethylsilyl-1,3-butadiyne and cyclopentadienyltrimethylsilane;
an arylalkylsilane, such as phenyldimethylsilane and phenyltrimethylsilane;
an alkynylalkylsilane, such as propargyltrimethylsilane;
an alkenylalkylsilane, such as vinyltrimethylsilane;
a disilane, such as hexamethyldisilane;
a siloxane, such as octamethylcyclotetrasiloxane, tetramethylcyclotetrasiloxane, and hexamethylcyclotetrasiloxane;
N,O-bis(trimethylsilyl)acetamide; and
bis(trimethylsilyl)carbodiimide.

These species of ions may be used alone or in a combination of two or more.

Of these, at least one species of ions selected from the group consisting of hydrogen, nitrogen, oxygen, argon, helium, neon, xenon, and krypton is preferable because of easier implantation and because a gas barrier layer having superior gas barrier property can be obtained.

The method of ion implantation is not limited, and examples include a method of irradiating ions (ion beam) accelerated by an electric field and a method of implanting plasma ions. Of these, the latter, a method of implanting plasma ions, is preferable because a film having gas barrier property can be easily obtained.

The plasma ion implantation method is preferably: (α) a method of implanting ions present in the plasma generated using an external electric field into the polymer layer; or (β) a method of implanting ions present in the plasma generated only by the electric field generated by a negative high voltage pulse applied to the layer into the polymer layer without using an external electric field.

In method (α) above, the pressure during ion implantation (pressure during plasma ion implantation) is preferably from 0.01 to 1 Pa. When the pressure during plasma ion implantation is within this range, ions can be easily, efficiently, and uniformly implanted, and the target gas barrier layer can be efficiently formed.

Method (β) does not require increasing the degree of decompression, deploys simple processing operation, and reduces the processing time greatly. Also, the entire layer can be treated uniformly, and ions in the plasma can be continuously implanted into the polymer layer with high energy when a negative high voltage pulse is applied. Furthermore, good quality ions can be implanted uniformly into the polymer layer by simply applying a negative high voltage pulse to the layer without requiring any other special means, for example, a high frequency power source such as radio frequency (abbreviated as "RF" hereafter) or microwave.

In either of the above methods (α) and (β), the pulse width when applying a negative high voltage pulse, that is, during ion implantation, is preferably from 1 to 15 µsec. When the pulse width is within this range, ions can be implanted more easily, efficiently, and uniformly.

Furthermore, the applied voltage when generating plasma is preferably from -1 to -50 kV, more preferably from -1 to -30 kV, and particularly preferably from -5 to -20 kV. When ion implantation is performed at an applied voltage of less than -1 kV, the ion implantation amount (dose) is insufficient, and the desired performance is less likely to be obtained. Meanwhile, when ion implantation is performed at an applied voltage of greater than -50 kV, the film builds up static charge during ion implantation, and problems such as coloration of the film tend to occur, which is not desirable.

Examples of the ion species used in plasma ion implantation include the same as those exemplified as the ions to be implanted.

A plasma ion implantation apparatus is used during the process of implanting ions in a plasma into the polymer layer.

Specific examples of the plasma ion implantation apparatus include: (i) an apparatus that uniformly surrounds a polymer layer (hereinafter may be referred to as "target ion implantation layer") with a plasma by superimposing high-frequency power on a feedthrough that applies a negative high voltage pulse to the target ion implantation layer so as to attract, implant, collide, and deposit ions in the plasma (see JP 2001-26887 A); (ii) an apparatus having an antenna provided in a chamber, the apparatus, after high-frequency power is applied to generate a plasma and after the plasma reaches the periphery of a target ion implantation layer, alternately applying positive and negative pulses to the target ion implantation layer so as to heat up the target ion implantation layer by attracting and colliding electrons in the plasma using the positive pulse and to attract and implant ions in the plasma by applying the negative pulse while controlling the pulse constant and the temperature (see JP 2001-156013 A); (iii) a plasma ion implantation apparatus that generates a plasma using an external electric field, such as a high-frequency power source such as microwave, and applies a high voltage pulse to attract and implant ions in the plasma; and (iv) a plasma ion implantation apparatus that implants ions in the plasma generated only by the electric field generated by applying a high-voltage pulse without using an external electric field.

Among these, the plasma ion implantation apparatus of (iii) or (iv) is preferable because the processing operation is simple, the processing time can be greatly reduced, and the apparatus is suitable for continuous use.

A method that deploys the plasma ion implantation apparatus of (iii) and (iv) is described in WO 2010/021326.

In the plasma ion implantation apparatus of (iii) and (iv), a high voltage pulse power supply is also used as a plasma generating means for generating plasma. Therefore, other special means such as a high-frequency power source such as RF and microwave are not necessary, and by simply applying a negative high voltage pulse, a plasma can be generated, and ions in the plasma can be continuously implanted into a polymer layer. As such, a polymer layer having a portion modified by ion implantation on the surface, that is, a gas barrier laminate in which a gas barrier layer is formed, can be mass-produced.

The thickness of the portion where ions are implanted can be controlled by implantation conditions, such as the species of ions, the applied voltage, and the processing time, and can be determined according to, for example, the thickness of the polymer layer and the purpose of the gas barrier laminate, but is typically from 5 to 1000 nm.

A fact that ions have been implanted can be confirmed by performing elemental analysis measurement at a position approximately 10 nm from the surface of the polymer layer using X-ray photoelectron spectroscopy (XPS).

A fact that the gas barrier layer has a gas barrier property can be confirmed by a small water vapor transmission rate of the gas barrier layer.

The water vapor transmission rate of the gas barrier layer in an atmosphere of 40°C and 90% relative humidity is typically 1.0 g/m²/day or less, preferably 0.8 g/m²/day or less, more preferably 0.5 g/m²/day or less, and even more preferably 0.1 g/m²/day or less. The water vapor transmission rate can be measured by a known method.

### (1-3. Process film)

The process film has a role of protecting the base layer, the gas barrier layer, and another layer as described above when, for example, storing and transporting the gas barrier laminate, and is peeled off in a predetermined step.

When the gas barrier laminate contains a process film, the gas barrier laminate may have a process film on one side or a process film on both sides. In the latter case, it is preferable that two types of process films are used and that the process film to be peeled off first is made easier to peel off than the other one. When the process film is provided on the base layer side, the gas barrier laminate possesses good handling property while its base layer being protected compared to a gas barrier laminate that does not have a process film.

The process film is preferably in the shape of a sheet or a film. The shape of a sheet or the shape of a film is not limited to an elongated shape and may also include the shape of a short flat plate.

Examples of the process film include: a paper substrate such as glassine paper, coated paper, and high-quality paper; a laminated paper in which a thermoplastic resin such as polyethylene or polypropylene is laminated on such a paper substrate; the paper substrate described above sealed with, for example, cellulose, starch, polyvinyl alcohol, or acrylic-styrene resin; or, a plastic film, such as a polyester film such as polyethylene terephthalate, polybutylene terephthalate, and polyethylene naphthalate, and a polyolefin film such as polyethylene and polypropylene; and glass.

Furthermore, the process film may have a release agent layer provided on a paper substrate or a plastic film from the perspective of ease of handling. The release layer can be formed using a known release agent, such as a silicone-based release agent, a fluorine-based release agent, an alkyd-based release agent, and an olefin-based release agent.

While the thickness of the release agent layer is not limited, it is normally from 0.02 to 2.0 µm, more preferably from 0.05 to 1.5 µm.

From the perspective of ease of handling, the thickness of the process film is preferably from 1 to 500 µm, more preferably from 5 to 300 µm.

The surface roughness Ra (arithmetic mean roughness) of the process film is preferably 10.0 nm or smaller, more preferably 8.0 nm or smaller. Furthermore, the surface roughness Rt (maximum cross-sectional height) is preferably 100 nm or smaller, more preferably 50 nm or smaller.

When the surface roughness Ra is greater than 10.0 nm and the surface roughness Rt is greater than 100 nm, the surface roughness of the layer in contact with the process film increases, leading to a possibility of deteriorated gas barrier property of the gas barrier laminate.

Note that the surface roughness Ra and Rt are obtained by optical interferometry at a measurement area of 100 µm × 100 µm.

### (1-4. Gas barrier laminate)

As described above, the gas barrier laminate according to an embodiment of the present invention includes the process film, the base layer, and the gas barrier layer, in this order. When actually using the gas barrier laminate, the process film is peeled off from the gas barrier laminate, and the gas barrier laminate is then applied to a display or an electronic device.

The thickness of the gas barrier laminate can be determined as appropriate according to the application of the target electronic device or the like. The substantial thickness of the gas barrier laminate according to an embodiment of the present invention is preferably from 0.3 to 50 µm, more preferably from 0.5 to 25 µm, and more preferably from 0.7 to 12 µm, from the perspective of handling property.

Note that "substantial thickness" refers to the thickness in a use state. That is, the gas barrier laminate may have a process sheet or the like, but the thickness of the portion (such as the process sheet) that is removed during use is not included in the "substantial thickness".

The base layer according to an embodiment of the present invention can have excellent flexibility; furthermore, when the thickness of the gas barrier laminate is reduced, the bending resistance of the gas barrier laminate after the gas barrier laminate has been implemented can be further improved.

The gas barrier laminate according to an embodiment of the present invention has the base layer and the gas barrier layer described above, and therefore has excellent heat resistance, interlayer adhesion, and gas barrier property, as well as a low birefringence and excellent optical isotropy.

The in-plane retardation of the gas barrier laminate is typically not greater than 20 nm, preferably not greater than 15 nm. The retardation in the thickness direction is typically not greater than -500 nm, preferably not greater than -450 nm. In addition, birefringence, or the value obtained by dividing the in-plane retardation by the thickness of the gas barrier laminate, is typically not greater than 100 × 10⁻⁵, preferably not greater than 20 × 10⁻⁵.

When the in-plane retardation, retardation in the thickness direction, and birefringence of the gas barrier laminate are within the ranges described above, the gas barrier laminate according to an embodiment of the present invention has excellent optical isotropy and can be desirably used in an optical application.

The water vapor transmission rate of the gas barrier laminate according to an embodiment of the present invention in an atmosphere of 40°C and 90% relative humidity is typically 1.0 × 10⁻² g/m²/day or less, preferably 8.0 × 10⁻³ g/m²/day or less, and more preferably 6.0 × 10⁻³ g/m²/day or less.

The gas barrier laminate according to an embodiment of the present invention has a base layer and a gas barrier layer on at least one side of the base layer. The gas barrier laminate according to an embodiment of the present invention may have one base layer and one gas barrier layer, or may have two or more layers of the base layer and/or the gas barrier layer.

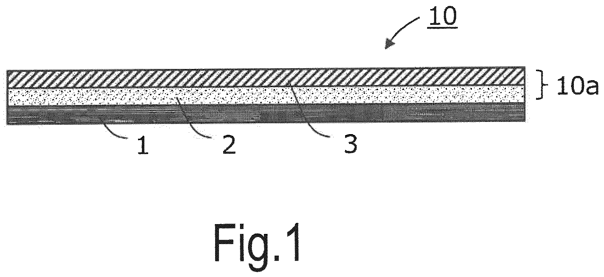

A specific example of a configuration of the gas barrier laminate according to an embodiment of the present invention is illustrated in Fig. 1.

The gas barrier laminate (10) illustrated in Fig. 1 has a gas barrier layer (3) on one side of the base layer (2), and has a process film (1) on the side of the base layer (2) opposite to the gas barrier layer (3). When the process film (1) is peeled off, the portion represented by the reference sign "10a", which includes the base layer (2) and the gas barrier layer (3), is a gas barrier laminate after the process film has been removed.

The gas barrier laminate according to an embodiment of the present invention is not limited to that illustrated in Fig. 1, and may have a gas barrier layer on both sides of the base layer, or may be a laminate in which a plurality of sets, one set being a base layer and a gas barrier layer, are laminated together. Furthermore, an embodiment of the present invention may also include one or two or more of another layer in a range that does not impair the object of the present invention.

Examples of the other layer include a conductor layer, a shock absorbing layer, an adhesive layer, a bonding layer, and a process sheet. The position of the other layer to be placed is not limited.

Examples of the material that constitutes the conductor layer include a metal, an alloy, a metal oxide, an electrically conductive compound, and a mixture of these. Specific examples include: antimony-doped tin oxide (ATO); fluorine-doped tin oxide (FTO); a semi-conductive metal oxide, such as tin oxide, germanium-doped zinc oxide (GZO), zinc oxide, indium oxide, indium tin oxide (ITO), and indium zinc oxide (IZO); a metal such as gold, silver, chromium, and nickel; a mixture of these metals and conductive metal oxides; an inorganic conductive substance such as copper iodide and copper sulfide; and an organic conductive material such as polyaniline, polythiophene, and polypyrrole.

The method for forming the conductor layer is not limited. Examples include vapor deposition, sputtering, ion plating, thermal CVD, and plasma CVD.

The thickness of the conductor layer may be selected as appropriate according to, for example, the application. Typically, the thickness of the conductor layer is from 10 nm to 50 µm, preferably from 20 nm to 20 µm.

The shock absorbing layer is for protecting the gas barrier layer when an impact is applied to the gas barrier layer. The material for forming the shock absorbing layer is not limited, and examples include an acrylic resin, a urethane resin, a silicone resin, an olefin resin, and a rubber material.

The method for forming the shock absorbing layer is not limited, and examples include a method of coating a layer to be laminated with a shock absorbing layer forming solution containing a material forming the shock absorbing layer and, optionally, another component such as a solvent, drying the resulting coating film, and performing heating and the like as necessary.

Alternatively, the shock absorbing layer may be formed separately on a release substrate as a film, and the resulting film may be transferred and laminated onto the layer to be laminated.

The thickness of the shock absorbing layer is typically from 1 to 100 µm, preferably from 5 to 50 µm.

The adhesive layer is a layer used when attaching the gas barrier laminate to an adherend. The material for forming the adhesive layer is not limited, and a known adhesive or pressure-sensitive adhesive, such as an acrylic-based adhesive or pressure-sensitive adhesive, a silicone-based adhesive or pressure-sensitive adhesive, and a rubber-based adhesive or pressure-sensitive adhesive, and a heat sealing material can be used.

The bonding layer is a layer used in the case of producing the gas barrier laminate by bonding a plurality of sets together, one set being a base layer and a gas barrier layer. The bonding layer is a layer for bonding the base layer of one set with the gas barrier layer of the neighboring set to maintain a laminated structure. The bonding layer may have a single layer or multiple layers. Examples of the bonding layer include a layer having a single layer structure formed using an adhesive or a layer formed by applying an adhesive on both sides of a support layer.

The material used in forming the bonding layer is not limited as long as the material can bond sets of a base layer and a gas barrier layer together to maintain a laminated structure, and a known adhesive can be used. However, from the perspective of capability to bond sets of a base layer and a gas barrier layer together at room temperature, a pressure-sensitive adhesive is preferable.

Examples of the pressure-sensitive adhesive used in the bonding layer include an acrylic-based pressure-sensitive adhesive, a urethane-based pressure-sensitive adhesive, a silicone-based pressure-sensitive adhesive, and a rubber-based pressure-sensitive adhesive. Of these, an acrylic-based pressure-sensitive adhesive and a urethane-based pressure-sensitive adhesive are preferable from the perspective of adhesive strength, transparency, and handling property. Furthermore, a pressure-sensitive adhesive that can form a crosslinked structure as described below is preferable.

The pressure-sensitive adhesive may be in any form, such as a solvent-type pressure-sensitive adhesive, an emulsion-type pressure-sensitive adhesive, and a hot-melt type pressure-sensitive adhesive.

### (2. Method for producing gas barrier laminate)

The gas barrier laminate according to an embodiment of the present invention is produced using a process film. The use of the process film facilitates efficient and easy production of the gas barrier laminate. In particular, a method having the following Steps 1 to 3 is preferred.
Step 1: forming a curable resin layer on a process film using a curable resin composition containing a polymer component (A) having a glass transition temperature (Tg) of 250°C or higher and a curable monomer (B)
Step 2: curing the curable resin layer resulting from Step 1 and forming a base layer formed of the cured resin layer
Step 3: forming a gas barrier layer on the base layer resulting from Step 2

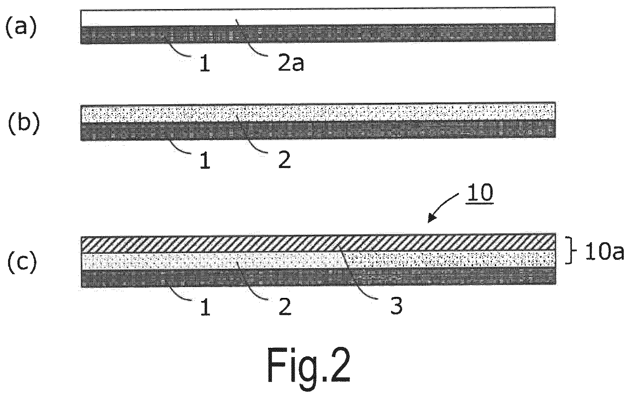

Fig. 2 illustrates an example of a production process of the gas barrier laminate according to an embodiment of the present invention. Fig. 2(a) corresponds to Step 1, Fig. 2(b) corresponds to Step 2, and Fig. 2(c) corresponds to Step 3.

### (Step 1)

First, a curable resin layer [indicated by the reference sign "2a" in Fig. 2(a)] is formed on a process film (indicated by the reference sign "1" in Fig. 2) using a curable resin composition containing a polymer component (A) having a Tg of 250°C or higher and a curable monomer (B).

Examples of the process film and the curable resin composition used include the same as those described above.

The method for coating the process film with the curable resin composition is not limited, and a known coating method such as spin coating, spray coating, bar coating, knife coating, roll coating, blade coating, die coating, and gravure coating can be used.

The method for drying the resulting coating film is not limited, and a known drying method such as hot air drying, hot roll drying, and infrared irradiation can be used. As described above, although the curable resin composition used to form the base layer according to an embodiment of the present invention contains a polymer component (A) having a very high Tg, the curable resin composition contains a curable monomer (B); as such, when the resulting coating film using a solution casting method is dried, the solvent can be efficiently removed.

The drying temperature of the coating film is typically from 30 to 150°C, preferably from 50 to 100°C.

The thickness of the dried coating film (curable resin layer) is not limited, but because there is little difference between the thickness before and after curing, the thickness may be the same as the thickness of the base layer described above.

### (Step 2)

Next, the curable resin layer formed in Step 1 is cured, and a cured resin layer is formed. This cured resin layer is the base layer [indicated by the reference sign "2" in Fig. 2(b)].

The method for curing the curable resin layer is not limited, and a known method can be used. For example, when the curable resin layer is formed using a curable resin composition containing a thermal polymerization initiator, the curable resin layer can be cured by heating the curable resin layer. The heating temperature is usually from 30 to 150°C, preferably from 50 to 100°C.

Furthermore, when the curable resin layer is formed using a curable resin composition containing a photopolymerization initiator, the curable resin layer can be cured by irradiating the curable resin layer with an active energy ray. For the active energy ray irradiation, for example, a high-pressure mercury lamp, an electrodeless lamp, or a xenon lamp can be utilized.

The wavelength of the active energy ray is preferably from 200 to 400 nm, more preferably from 350 to 400 nm. The intensity is usually from 50 to 1000 mW/cm², and the dose is usually from 50 to 5000 mJ/cm², preferably from 1000 to 5000 mJ/cm². The duration of irradiation is usually from 0.1 to 1000 seconds, preferably from 1 to 500 seconds, and even more preferably from 10 to 100 seconds. The active energy ray may be applied a plurality of times so that the dose falls within the above range taking account of the thermal load during the irradiation step.

In this case, the curable resin composition may be irradiated with the active energy ray through a filter that absorbs light at a wavelength not needed for the curing reaction in order to prevent degradation of the polymer component (A) due to activation energy ray irradiation and to prevent coloring of the base layer. According to this method, light that is at a wavelength not needed for the curing reaction and that degrades the polymer component (A) is absorbed by the filter. As a result, degradation of the polymer component (A) is suppressed, and a colorless, transparent base layer is easily obtained.

A resin film such as a polyethylene terephthalate film can be used as the filter. When a resin film is used, it is preferable to provide a step of laminating a resin film, such as a polyethylene terephthalate film, on the curable resin layer between Step 1 and Step 2. Note that the resin film is typically peeled off after Step 2.

Furthermore, the curable resin layer can be cured by irradiating the curable resin layer with an electron beam. In a case where an electron beam is irradiated, the curable resin layer usually can be cured without the use of a photopolymerization initiator. In a case where an electron beam is irradiated, an electron beam accelerator or the like can be used. The dose is usually in the range from 10 to 1000 krad. The duration of irradiation is usually from 0.1 to 1000 seconds, preferably from 1 to 500 seconds, and even more preferably from 10 to 100 seconds.

Curing of the curable resin layer may be carried out in an atmosphere of an inert gas such as nitrogen gas as necessary. When curing is carried out in an atmosphere of an inert gas, it is easy to prevent oxygen, moisture, and the like from hindering the curing.

### (Step 3)

Thereafter, a gas barrier layer [indicated by the reference sign "3" in Fig. 2(c)] is formed on the base layer resulting from Step 2.

The method described above can be employed as appropriate as the method for forming the gas barrier layer.

For example, when the gas barrier layer is a layer formed by modification of a layer containing a silicon-containing polymer compound, the gas barrier layer can be formed by forming a layer containing a silicon-containing polymer compound on the base layer and forming a gas barrier layer by modifying the layer containing a silicon-containing polymer compound.

Although the gas barrier layer contained in the gas barrier laminate can be formed by various methods such as extrusion molding or coating, the gas barrier performance of the gas barrier laminate may be reduced depending on the method for forming the gas barrier layer. In particular, when the gas barrier layer is formed by a method involving heating, such as coating and drying, there is a risk that the base layer is physically or chemically affected, resulting in a reduction in properties such as a gas barrier property.

However, as described above, the base layer according to an embodiment of the present invention is a layer formed of a cured product of a curable resin composition containing a polymer component (A) and a curable monomer (B), the Tg of the polymer component (A) being 250°C or higher, and therefore, the base layer is less likely to be affected by the heating during the formation of the gas barrier layer. As a result, the gas barrier layer formed is less likely to be affected by deformation or the like of the base layer during the production process, and problems such as reduced gas barrier property due to micro-cracks and the like generated in the gas barrier layer are less likely to occur.

The methods described above can be adopted as the method for forming a layer containing a silicon-containing polymer compound and the method for performing a modification treatment.

Furthermore, regarding the method for performing a modification treatment, it is preferable to produce the gas barrier laminate by transporting a long film, in which a layer containing a silicon-containing polymer compound is formed on the base layer resulting from Step 2, in a certain direction and performing a modification treatment on the layer containing a silicon-containing polymer compound at the same time.

According to this production method, for example, a long gas barrier laminate can be produced continuously.

Note that the process film is usually peeled off in a predetermined step depending on the application of the gas barrier laminate, which results in, as illustrated in Fig. 2(c), a gas barrier laminate (10a) after the process film (3) has been removed. For example, the process film may be peeled off after another layer is formed after Step 3, or the process film may be peeled off after Step 3. In addition, the process film may be peeled off between Step 2 and Step 3.

As such, although the production method having the Steps 1 to 3 described above utilizes a process film to form a curable resin layer, the gas barrier laminate resulting from this method may or may not have a process film.

According to the method for producing a gas barrier laminate described above, the gas barrier laminate according to an embodiment of the present invention can be produced efficiently, continuously, and easily.

### [Examples]

The present invention will now be described in greater detail by way of examples, but the present invention is not limited by these examples.

Measurements and evaluation of the physical properties of the base layer and the gas barrier laminate of each one of the examples and comparative examples were carried out in accordance with the following procedure.

### (Solvent resistance of base layer)

A base layer was cut into a test piece of 25 mm × 25 mm, and the test piece was immersed for 2 minutes in a xylene solvent. The change of the test piece before and after immersion was visually observed, and the solvent resistance was evaluated in accordance with the criteria described below.
A: No change.
B: Slight external shape change is visible, but is not problematic for practical use.
C: Whitening and external shape changes such as swelling, curling, and waviness have occurred, which hinders practical use.

### (Tensile elastic modulus at 130°C of base layer)

A base layer was cut into a test piece of 15 mm × 150 mm, and the tensile elastic modulus was measured in accordance with JIS K 7127:1999. Specifically, the test piece described above was placed in a tensile tester with a constant-temperature bath (constant-temperature bath: TKC-R3T-G-5, available from Mita Sangyo Co., Ltd.; tensile tester: RTG-1210, available from A&D Company, Limited). After the distance between chucks was set to 100 mm, the test piece was heated for 3 minutes at 130°C to adjust the measurement atmosphere. Thereafter, a tensile test was performed at a rate of 200 mm/min, and the tensile elastic modulus [GPa] was measured. Note that the maximum slope of the tensile stress with respect to the tensile displacement was defined as the tensile elastic modulus.

### (Elongation at break of base layer)

A base layer was cut into a test piece of 15 mm × 150 mm, and the elongation at break was measured in accordance with JIS K7127:1999. Specifically, the test piece was mounted on a tensile tester (Autograph, available from Shimadzu Corporation) with a distance between chucks set at 100 mm, and a tensile test was performed at a rate of 200 mm/min to measure the elongation at break [%]. Note that when the test piece had no yield point, the tensile strain at break was considered to be the elongation at break, while when the test piece had a yield point, the strain at the yield point was considered to be the elongation at break.

### (Optical isotropy of gas barrier laminate)

A first polyethylene terephthalate (PET) film on the base layer side, which served as a process film, was peeled away from the gas barrier laminate, resulting in a measurement sample. The optical isotropy of this measurement sample was evaluated by measuring the in-plane retardation Re (550) using a KOBRA-WR, available from Oji Scientific Instruments.

### (Water vapor transmission rate (WVTR) of gas barrier laminate)

A gas barrier laminate was cut into a round test piece with an area of 50 cm², and the water vapor transmission rate (g/m²/day) was measured at a gas flow rate of 20 sccm under conditions of 40°C and 90% RH using a water vapor transmission rate measuring device (device name: AQUATRAN, available from MOCON, Inc). Note that the lower detection limit of the measuring device was 0.0005 g/m²/day. Since the gas barrier laminate has poor self-supporting property after the PET film used to form the base layer is peeled off, the gas barrier laminate was measured while the PET film was laminated on. Since the water vapor transmission rate of the gas barrier layer was much smaller than that of the PET film, the effect on the WVTR due to the lamination of the PET film was negligibly small.

### (Example 1)

A curable resin composition 1 which results in a base layer was prepared in accordance with the following procedure.

### (Curable resin composition 1)

As a polymer component, 100 parts by mass of polyimide resin (PI) pellets (product name is KPI-MX300F, Tg = 354°C, weight average molecular weight is 280000, available from Kawamura Sangyo Co. Ltd.) was dissolved in methyl ethyl ketone (MEK) to prepare a 15 mass% solution of PI. Next, as a curable monomer, 122 parts by mass of tricyclodecane dimethanol diacrylate (A-DCP, available from Shin-Nakamura Chemical Co., Ltd.) and, as a polymerization initiator, 5 parts by mass of bis(2,4,6-trimethylbenzoyl)-phenylphosphine oxide (Irgacure 819, available from BASF) was added and mixed into the 15 mass% solution of PI above to prepare the curable resin composition 1. Note that the curable monomer and polymerization initiator used in this Example and other experimental examples did not contain a solvent and were all raw materials with a solid content of 100%.

Next, as a process film, a first PET film (PET100A-4100, thickness is 100 µm, available from Toyobo Co., Ltd.) having an easy-adhesive layer on one side was used; the side of the first PET film opposite the side with the easy-adhesive layer was coated with the curable resin composition, and the resulting coating film was heated and dried for 3 minutes at 90°C.

Furthermore, a second PET film (Cosmoshine A4100, thickness is 50 µm, available from Toyobo Co., Ltd.) having an easy-adhesive layer on one side was laminated on the dried coating film in a manner that the side of the second PET film opposite the easy-adhesive side was facing the dried coating film; then, using a belt conveyor type ultraviolet light irradiation device (product name: ECS-401GX, available from Eye Graphics Co., Ltd.) and a high pressure mercury lamp (H04-L41, available from Eye Graphics Co., Ltd.), under the conditions of a height of UV lamp of 100 mm, an output of UV lamp of 3 kw, a wavelength of 365 nm, an intensity of 400 mW/cm², and a dose of 800 mJ/cm² (as measured by a UV meter "UV-351", available from ORC Manufacturing Co., Ltd.), curing reaction was carried out by applying ultraviolet rays to the dried coating film through the second PET film, forming a base layer having a thickness of 5µm.

Next, the second PET film was peeled off to expose the base layer; a polysilazane compound [coating agent containing perhydropolysilazane (PHPS) as the main component, AQUAMICA NL-110-20, solvent: xylene, available from Merck Performance Materials Ltd.] was then applied to the base layer by spin coating and was heated and dried for 2 minutes at 130°C to form a polymer compound layer (polysilazane layer) having a thickness of 200 nm and containing perhydropolysilazane.

Next, using a plasma ion implantation device (RF power supply: "RF" 56000, available from JEOL Ltd.; high voltage pulse power supply: PV-3-HSHV-0835, available from Kurita Manufacturing Co., Ltd.) and under the conditions of a gas flow rate of 100 sccm, a duty ratio of 0.5%, an applied DC voltage of -6 kV, a frequency of 1000 Hz, an applied RF power of 1000 W, a chamber internal pressure of 0.2 Pa, a DC pulse width of 5 µsec, and a processing time of 200 seconds, ions derived from argon gas were implanted into the surface of the polymer compound layer (polysilazane layer) to form a gas barrier layer. Thus, a gas barrier laminate was produced by laminating the gas barrier layer on the base layer.

### (Comparative example 1)

A gas barrier laminate was produced in the same manner as in Example 1 with the exception that polysulfone resin (PSF) pellets (ULTRASON S6010, Tg = 187°C, weight average molecular weight is 60000, available from BASF) were used as the polymer component (A).

### (Comparative example 2)

A gas barrier laminate was produced in the same manner as in Example 1 with the exception that toluene was used as the solvent for dissolving pellets in place of MEK, and polycarbonate resin (PC) pellets (Tg is 190°C or lower, weight average molecular weight of is less than 100000) were used as the polymer component (A).

The measurement results for each one of the Example and Comparative Examples are shown in Table 1.

### [Table 1]

**Table 1**

| | Measurement and Evaluation Target | Example 1 | Comparative Example 1 | Comparative Example 2 |
|---|---|---|---|---|
| Type of Polymer Component (A) | - | PI | PSF | PC |
| Tg of Polymer Component (A) [°C] | - | 354 | 187 | ≦ 190 |
| Type of Curable Monomer (B) | - | DCP | DCP | DCP |
| Mass Ratio [(A): (B)] | - | 45:55 | 45:55 | 45:55 |
| Solvent Resistance | Base layer | A | A | A |
| Tensile Elastic Modulus at 130°C [MPa] and Evaluation Thereof | Base layer | 4.0 × 10³ | 1.0 × 10² | 4.9 × 10¹ |
| | | A | B | B |
| Elongation at Break [%] | Base layer | 2.7 | 2.0 | 2.3 |
| In-plane Retardation [nm] | Gas barrier laminate (without process film) | 0.1 | 0.2 | 0.8 |
| Water Vapor Transmission Rate [g/m²/day] | Gas barrier laminate | 4.0 × 10⁻³ | 1.3 × 10⁻² | 2.0 × 10⁻² |

| | | | | |
|---|---|---|---|---|
| 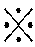 Meaning of abbreviations in Table 1 PI: Polyimide resin PSF: Polysulfone resin PC: Polycarbonate resin DCP: Tricyclodecane dimethanol diacrylate | | | | |

As seen from Table 1, in Example 1, the base layer has excellent solvent resistance, tensile elastic modulus at a high temperature, and elongation at break, and the gas barrier laminate has excellent optical isotropy and water vapor transmission rate.

In comparison, in Comparative Examples 1 and 2, although the solvent resistance of the base layer was good, the elongation at break of the base layer and the tensile elastic modulus at a high temperature were lower than that of Example 1, and the water vapor transmission rate was one or more order of magnitude lower than that of Example 1.

### [Industrial Applicability]

The gas barrier laminate according to an embodiment of the present invention enables thickness reduction and further improvement of gas barrier property while having high optical isotropy. As such, the gas barrier laminate according to an embodiment of the present invention can be suitably applied to an electronic device that requires gas barrier property, flexibility, and bending resistance all at once, such as a flexible organic EL device, or a member for an element constituting various electronic devices that are susceptible to atmospheric deterioration, such as a flexible thermoelectric conversion element.

### [Reference Signs List]

1: Process film
2: Base layer
2a: Base layer before curing
3: Gas barrier layer
10: Gas barrier laminate
10a: Gas barrier laminate after process film has been removed

## Claims

1. A gas barrier laminate comprising a process film, a base layer, and a gas barrier layer, in this order,
the base layer being a layer formed of a cured product of a curable resin composition containing a polymer component (A) and a curable monomer (B), and
the polymer component (A) having a glass transition temperature of 250°C or higher,
wherein the polymer component (A) comprises a polyimide resin and the curable monomer (B) comprises a monofunctional (meth)acrylic acid derivative or a polyfunctional (meth)acrylic acid derivative, and
wherein the glass transition temperature of the polymer component is the temperature at the maximum of tanδ obtained by viscoelasticity measurement under a tensile mode with a frequency of 11 Hz, a heating rate of 3°C/minute, and a range of from 0 to 250°C.

2. The gas barrier laminate according to claim 1, wherein the polymer component (A) has a weight average molecular weight of 100000 or greater, and
the weight average molecular weight is measured by gel permeation chromatography and calibrated with polystyrene.

3. The gas barrier laminate according to claim 1 or 2, wherein the polyimide resin is soluble in methyl ethyl ketone.

4. The gas barrier laminate according to claim 3, wherein the polyimide resin comprises a fluoro group in the molecule.

5. The gas barrier laminate according to any one of claims 1 to 4, wherein the base layer has a thickness from 0.1 to 10 µm.

6. The gas barrier laminate according to any one of claims 1 to 5, wherein the gas barrier layer is a coating film.

7. The gas barrier laminate according to any one of claims 1 to 6, wherein the base layer has an elongation at break of 2.5% or greater, and
the elongation at break is measured by the following procedure:
the base layer is cut into a test piece of 15 mm × 150 mm, the test piece is placed on a tensile tester with a distance between chucks set at 100 mm, and then, a tensile test is performed by the tensile tester at a rate of 200 mm/min to measure the elongation at break.

8. The gas barrier laminate according to any one of claims 1 to 7, wherein the base layer has a tensile elastic modulus at 130°C of 1 × 10³ MPa or greater, and
the tensile elastic modulus is measured in accordance with JIS K 7127:1999 by the following procedure:
the base layer is cut into a test piece of 15 mm × 150 mm, the test piece is placed in a tensile tester with a constant-temperature bath, the distance between chucks is set to 100 mm, the test piece is heated for 3 minutes at 130°C, a tensile test is performed at a rate of 200 mm/min, and the maximum slope of the tensile stress with respect to the tensile displacement is defined as the tensile elastic modulus.

## Patentansprüche

1. Gassperrlaminat, das einen Prozessfilm, eine Basisschicht und eine Gassperrschicht in dieser Reihenfolge umfasst,
wobei die Basisschicht eine Schicht ist, die aus einem gehärteten Produkt einer härtbaren Harzzusammensetzung gebildet ist, die eine Polymerkomponente (A) und ein härtbares Monomer (B) enthält, und
die Polymerkomponente (A) eine Glasübergangstemperatur von 250°C oder höher aufweist,
wobei die Polymerkomponente (A) ein Polyimidharz umfasst und das härtbare Monomer (B) ein monofunktionelles (Meth)acrylsäurederivat oder ein polyfunktionelles (Meth)acrylsäurederivat umfasst, und
wobei die Glasübergangstemperatur der Polymerkomponente die Temperatur beim Maximum von tanδ ist, die durch eine Viskoelastizitätsmessung unter einem Zugmodus mit einer Frequenz von 11 Hz, einer Aufheizrate von 3 °C/Minute und einem Bereich von 0 bis 250 °C erhalten wird.

2. Gasbarrierelaminat nach Anspruch 1, wobei die Polymerkomponente (A) ein gewichtsmittleres Molekulargewicht von 100000 oder mehr aufweist, und
das gewichtsmittlere Molekulargewicht durch Gelpermeationschromatographie gemessen und mit Polystyrol kalibriert wird.

3. Gasbarrierelaminat nach Anspruch 1 oder 2, wobei das Polyimidharz in Methylethylketon löslich ist.

4. Gassperrlaminat nach Anspruch 3, wobei das Polyimidharz eine Fluorgruppe im Molekül enthält.

5. Gasbarrierelaminat nach einem der Ansprüche 1 bis 4, wobei die Basisschicht eine Dicke von 0,1 bis 10 µm aufweist.

6. Gassperrlaminat nach einem der Ansprüche 1 bis 5, wobei die Gassperrschicht eine Beschichtungsfolie ist.

7. Gasbarrierelaminat nach einem der Ansprüche 1 bis 6, wobei die Basisschicht eine Bruchdehnung von 2,5 % oder mehr aufweist, und
die Bruchdehnung nach folgendem Verfahren gemessen wird:
die Grundschicht wird in ein Prüfstück von 15 mm × 150 mm geschnitten, das Prüfstück wird auf eine Zugprüfmaschine gelegt, wobei der Abstand zwischen den Spannvorrichtungen auf 100 mm eingestellt ist, und dann wird mit der Zugprüfmaschine eine Zugprüfung mit einer Geschwindigkeit von 200 mm/min durchgeführt, um die Bruchdehnung zu messen.

8. Gasbarrierelaminat nach einem der Ansprüche 1 bis 7, wobei die Basisschicht einen Zug-Elastizitätsmodul bei 130 °C von 1 x 10³ MPa oder mehr aufweist, und
der Zug-Elastizitätsmodul gemäß JIS K 7127:1999 nach dem folgenden Verfahren gemessen wird:
die Grundschicht wird in ein Prüfstück von 15 mm × 150 mm geschnitten, das Prüfstück wird in eine Zugprüfmaschine mit einem Bad mit konstanter Temperatur eingelegt, der Abstand zwischen den Spannvorrichtungen wird auf 100 mm eingestellt, das Prüfstück wird 3 Minuten lang auf 130 °C erhitzt, ein Zugversuch wird mit einer Geschwindigkeit von 200 mm/min durchgeführt, und die maximale Steigung der Zugspannung in Bezug auf die Zugverschiebung wird als Zug-Elastizitätsmodul definiert.

## Revendications

1. Stratifié de barrière aux gaz comprenant un film de traitement, une couche de base et une couche de barrière aux gaz, dans cet ordre,
la couche de base étant une couche formée d'un produit durci d'une composition de résine durcissable contenant un composant polymère (A) et un monomère durcissable (B), et
le composant polymère (A) ayant une température de transition vitreuse de 250°C ou plus,
dans lequel le composant polymère (A) comprend une résine polyimide et le monomère durcissable (B) comprend un dérivé d'acide (méth)acrylique monofonctionnel ou un dérivé d'acide (méth)acrylique polyfonctionnel, et
dans lequel la température de transition vitreuse du composant polymère est la température au maximum de tanδ obtenue par mesure de viscoélasticité en mode traction avec une fréquence de 11 Hz, un taux de chauffage de 3°C/minute, et une plage de 0 à 250°C.

2. Le stratifié de barrière aux gaz selon la revendication 1, dans lequel le composant polymère (A) a une masse moléculaire moyenne en poids de 100000 ou plus, et
la masse moléculaire moyenne en poids est mesurée par chromatographie par perméation de gel et calibrée avec du polystyrène.

3. Le stratifié de barrière aux gaz selon la revendication 1 ou 2, dans lequel la résine polyimide est soluble dans la méthyléthylcétone.

4. Le stratifié de barrière aux gaz selon la revendication 3, dans lequel la résine polyimide comprend un groupe fluoré dans la molécule.

5. Le stratifié de barrière aux gaz selon l'une quelconque des revendications 1 à 4, dans lequel la couche de base a une épaisseur de 0,1 à 10 µm.

6. Le stratifié de barrière aux gaz selon l'une quelconque des revendications 1 à 5, dans lequel la couche de barrière aux gaz est un film de revêtement.

7. Le stratifié de barrière aux gaz selon l'une quelconque des revendications 1 à 6, dans lequel la couche de base présente un allongement à la rupture de 2,5 % ou plus, et
l'allongement à la rupture est mesuré par la procédure suivante :
la couche de base est découpée en une éprouvette de 15 mm × 150 mm, l'éprouvette est placée sur un testeur de traction avec une distance entre les mandrins fixée à 100 mm, et puis, un essai de traction est effectué par le testeur de traction à un taux de 200 mm/min pour mesurer l'allongement à la rupture.

8. Le stratifié de barrière aux gaz selon l'une quelconque des revendications 1 à 7, dans lequel la couche de base a un module d'élasticité en traction à 130°C de 1 × 10³ MPa ou plus, et
le module d'élasticité en traction est mesuré conformément à JIS K 7127:1999 par la procédure suivante :
la couche de base est découpée en une éprouvette de 15 mm × 150 mm, l'éprouvette est placée dans un testeur de traction avec un bain à température constante, la distance entre les mandrins est fixée à 100 mm, l'éprouvette est chauffée pendant 3 minutes à 130°C, un essai de traction est effectué à un taux de 200 mm/min, et la pente maximale de la contrainte de traction par rapport au déplacement de traction est définie comme le module élastique de traction.
